# EUROPEAN PATENT SPECIFICATION

(11) **EP 3 509 397 B1**
(45) Date of publication and mention of the grant of the patent: **04.11.2020**
(21) Application number: 17845832.9
(22) Date of filing: 15.06.2017
(51) Int. Cl.: H05B 6/12

(54) **INDUCTION HEATING DEVICE AND LOAD DETECTION METHOD IN INDUCTION HEATING DEVICE**
INDUKTIONSERWÄRMUNGSVORRICHTUNG LASTDETEKTIONSVERFAHREN IN DER INDUKTIONSERWÄRMUNGSVORRICHTUNG
DISPOSITIF CHAUFFANT PAR INDUCTION ET PROCÉDÉ DE DÉTECTION DE CHARGE DANS LE DISPOSITIF CHAUFFANT PAR INDUCTION

(30) Priority: 30.08.2016 JP 2016168392
(43) Date of publication of application: 10.07.2019
(73) Proprietor: Panasonic Intellectual Property Management Co., Ltd., Osaka-shi, Osaka 540-6207 (JP)
(72) Inventor: KUROSE, Yoichi, Osaka-shi, Osaka 540-6207 (JP); TAKEBE, Masaya, Osaka-shi, Osaka 540-6207 (JP); KINOSHITA, Masashi, Osaka-shi, Osaka 540-6207 (JP)
(74) Representative: SSM Sandmair
(86) International application number: PCT/JP2017/022049
(87) International publication number: WO 2018/042821

(56) References cited:
- EP-A1- 2 645 814
- WO-A1-2014/064931
- WO-A1-2014/064931
- WO-A1-2014/064941
- US-A1- 2010 243 642

## Description

### TECHNICAL FIELD

The present disclosure relates to an induction heating device that inductively heats a load, such as a metal cooking pot, placed on a top panel, and more particularly to a multi-coil induction heating device having multiple heating coils provided below the top panel.

### BACKGROUND ART

Recently, multi-coil induction heating cookers are being developed. A multi-coil induction heating cooker is provided with multiple heating coils disposed in a matrix below a top panel, and is configured such that a heating zone can be changed according to the circumstances (see Patent Literatures 1 and 2).

### Citation List

### Patent Literature

PTL 1: Unexamined Japanese Patent Publication No. 2008-293871
PTL 2: WO 2014/064931 A

### SUMMARY OF THE INVENTION

As described above, the multi-coil heating cooker disclosed in PTL 1 and PTL 2 detects a position of a load placed on the top panel and identifies one or more heating coils to be driven.

This operation is carried out by detecting a change in an electric signal on a conduction path which connects a power source of the heating cooker to each of the heating coils, when a detection current which is a high frequency power is supplied to the heating coils. This operation is referred to as load detection below.

How to implement energy-saving and accurate load detection in a short time is a problem to be addressed in the development of multi-coil induction heating devices.
The present invention is defined by the subject-matter of the independent claims. The dependent claims are directed to embodiments of advantage.

One aspect of the present disclosure provides an induction heating device including a top panel on which a load is placed, a plurality of heating coils provided below the top panel, at least one driver that supplies a high frequency power to the plurality of heating coils, an electric signal detector that detects an electric signal relating to an element included in the driver, and a controller that receives the electric signal which is detected and controls the driver.

In the induction heating device in this aspect, the controller causes the at least one driver to repeatedly supply a detection current which is the high frequency power to the plurality of heating coils at a predetermined detection cycle, and determines whether a load is placed above the plurality of heating coils based on an electric signal in response to the detection current.

The controller controls the driver such that the detection cycle is extended for a heating coil which is determined to have the load placed thereabove, from among the plurality of heating coils.

Another aspect of the present disclosure provides a load detection method in an induction heating device. The load detection method according to this aspect includes: repeatedly supplying a detection current which is a high frequency power to a plurality of heating coils provided below a top panel at a predetermined detection cycle; determining whether a load is placed above the plurality of heating coils based on an electric signal in response to the detection current; and extending the detection cycle for a heating coil which is determined to have the load placed thereabove, from among the plurality of heating coils.

### BRIEF DESCRIPTION OF DRAWINGS

FIG. 1 is an exploded perspective view of an induction heating cooker according to a first exemplary embodiment.
FIG. 2 is a plan view of the induction heating cooker, according the first exemplary embodiment, from which a top panel is removed.
FIG. 3 is a view illustrating sections A and B included in left heating zone Lh, right heating zone Rh, and central heating zone Ch, respectively.
FIG. 4 is a function block diagram regarding a section where two heating coils 3 are driven by one driver 4.
FIG. 5 is a circuit block diagram regarding a section where two heating coils 3 are driven by one driver 4.
FIG. 6A is a circuit block diagram illustrating a first modification of the circuit block diagram illustrated in FIG. 5.
FIG. 6B is a circuit block diagram illustrating a second modification of the circuit block diagram illustrated in FIG. 5.
FIG. 7A is a diagram schematically illustrating a change over time in a peak value of an amplitude of a detection current for placement detection.
FIG. 7B is a diagram schematically illustrating a change over time in a peak value of an amplitude of a detection current for placement detection.
FIG. 8A is a timing chart illustrating operations of switching elements 19a and 19b during detection period Dp1.
FIG. 8B is a timing chart illustrating operations of switching elements 19a and 19b during detection period Dp2.
FIG. 9A is a flowchart for placement detection according to the first exemplary embodiment.
FIG. 9B is a flowchart for placement detection according to the first exemplary embodiment.
FIG. 10A is a timing chart for placement detection and position identification according to the first exemplary embodiment.
FIG. 10B is a timing chart of a gate signal input to switching elements 19a and 19b during detection period Dp1.
FIG. 10C is a timing chart of a gate signal input to switching elements 19a and 19b during detection period Dp2.
FIG. 10D is a timing chart of a gate signal input to switching elements 19a and 19b during detection period Dp3.
FIG. 11 is a flowchart for position identification according to the first exemplary embodiment.
FIG. 12A is a timing chart for placement detection and position identification according to a second exemplary embodiment.
FIG. 12B is a flowchart for position identification according to the second exemplary embodiment.
FIG. 13A is a block diagram of an induction heating cooker for describing a concept of changing a detection cycle according to a third exemplary embodiment.
FIG. 13B is a timing chart for describing a concept of changing a detection cycle according to the third exemplary embodiment.
FIG. 14A is a flowchart for changing a detection cycle according to the third exemplary embodiment.
FIG. 14B is a flowchart for changing a detection cycle according to the third exemplary embodiment.
FIG. 15A is a timing chart for describing a concept of confirming a placement condition according to a fourth exemplary embodiment.
FIG. 15B is a diagram illustrating patterns of a placement condition for describing a concept of confirming a placement condition according to the fourth exemplary embodiment.
FIG. 16A is a flowchart for confirming a placement condition in a first detection cycle according to the fourth exemplary embodiment.
FIG. 16B is a flowchart for confirming a placement condition in a first detection cycle according to the fourth exemplary embodiment.
FIG. 17A is a flowchart for confirming a placement condition in second and subsequent detection cycles according to the fourth exemplary embodiment.
FIG. 17B is a flowchart for confirming a placement condition in second and subsequent detection cycles according to the fourth exemplary embodiment.
FIG. 17C is a flowchart for confirming a placement condition in second and subsequent detection cycles according to the fourth exemplary embodiment.
FIG. 18A is a flowchart for placement detection according to a fifth exemplary embodiment.
FIG. 18B is a flowchart for placement detection according to the fifth exemplary embodiment.
FIG. 19A is a flowchart for position identification according to the fifth exemplary embodiment.
FIG. 19B is a flowchart for position identification according to the fifth exemplary embodiment.
FIG. 20A is a flowchart for confirming a placement condition according to the fifth exemplary embodiment.
FIG. 20B is a flowchart for confirming a placement condition according to the fifth exemplary embodiment.
FIG. 21 is a flowchart for confirming a placement condition according to the fifth exemplary embodiment.
FIG. 22A is a flowchart for changing a detection cycle according to the fifth exemplary embodiment.
FIG. 22B is a flowchart for changing a detection cycle according to the fifth exemplary embodiment.

### DESCRIPTION OF EMBODIMENTS

Exemplary embodiments of the present disclosure will be described below with reference to the drawings. In all of the following drawings, identical or equivalent parts are given identical reference signs, and repeated description will be omitted.

Exemplary embodiments are one specific example of the present disclosure. Numerical values, shapes, configurations, steps, and order of the steps, for example, illustrated in the following exemplary embodiments are merely examples, and therefore are not intended to limit the present disclosure.

The present disclosure also includes a configuration formed by appropriately combining configurations according to some of the following exemplary embodiments. Therefore, the combined configuration provides all the effects of the relevant exemplary embodiments.

In the following, an induction heating cooker will be described as one example of the induction heating device according to the present disclosure. However, the present disclosure is not limited to an induction heating cooker.

In the following exemplary embodiments, left and right indicate left and right, respectively, when the induction heating cooker is viewed from a user using the induction heating cooker. A user side of the induction heating cooker is defined as a front of the induction heating cooker, and a side opposite to the user side is defined as a rear of the induction heating cooker.

### (First exemplary embodiment)

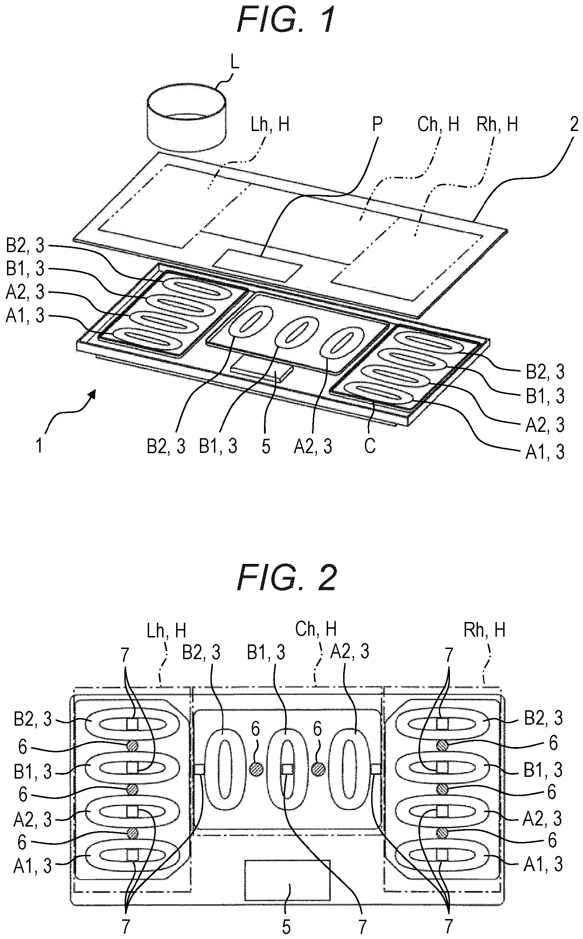

FIG. 1 is an exploded perspective view of an induction heating cooker, which is an induction heating device, according to a first exemplary embodiment of the present disclosure. FIG. 2 is a plan view of the induction heating cooker, according the present exemplary embodiment, from which a top panel is removed.

As illustrated in FIGS. 1 and 2, the induction heating cooker according to the present exemplary embodiment includes housing 1, top panel 2 covering an upper part of housing 1, and a plurality of heating coils 3 and operation display unit 5 which are provided inside housing 1.

A plurality of heating coils 3 are aligned in a row vertically or horizontally. Heating coils 3 have an elliptical shape in a plan view.

Due to the arrangement of heating coils 3 illustrated in FIG. 2, top panel 2 has left heating zone Lh on the left part, right heating zone Rh on the right part, and central heating zone Ch between left heating zone Lh and right heating zone Rh. Operation display area P is formed between left heating zone Lh and right heating zone Rh and in front of central heating zone Ch.

Four heating coils 3 are each disposed below left heating zone Lh and right heating zone Rh. These heating coils are aligned in a row in a front-rear direction with a major axis of the ellipse extending along a horizontal direction.

Three heating coils 3 are disposed below central heating zone Ch. These heating coils are aligned in a row in the horizontal direction with the major axis of the ellipse extending along the front-rear direction. Left heating zone Lh, right heating zone Rh, and central heating zone Ch constitute heating zone H.

In the present exemplary embodiment, a number of heating coils 3 provided respectively in left heating zone Lh, right heating zone Rh, and central heating zone Ch is merely one example, and not limited thereto. Although a plurality of heating coils 3 having an elliptical shape in a plan view are used, heating coils having a circular shape in a plan view may be used. The elliptical shape does not only mean an elliptic shape in a strict sense, and includes a shape with curved corners such as an ovoid or a shape like a running track.

Operation display unit 5 is a touch panel device which is provided below operation display area P and having a liquid crystal display unit. When the induction heating cooker is started, operation display unit 5 displays operation buttons, operation menu, operation detail, operating state, and the like.

As illustrated in FIG. 2, a plurality of temperature sensors are provided for detecting a temperature of a load placed in heating zone H. Specifically, in left heating zone Lh and right heating zone Rh, infrared sensors 6 are provided between two adjacent heating coils 3, and thermistor 7 is provided at a center of each of heating coils 3.

In central heating zone Ch, thermistor 7 is provided at a center of central heating coil 3 of three heating coils 3. Thermistors 7 are provided to two heating coils 3 other than central heating coil 3 on outer circumferences facing left heating zone Lh and right heating zone Rh, respectively. Infrared sensors 6 are provided between two adjacent heating coils 3.

According to this configuration, a temperature of a load can be accurately detected, wherever the load is placed on heating zone H.

Driver 4 (not illustrated in FIG. 2) for driving heating coils 3 and drive controller 11 (not illustrated in FIG. 2) for controlling operation display unit 5 and driver 4 are provided inside housing 1. Driver 4 and drive controller 11 will be described later.

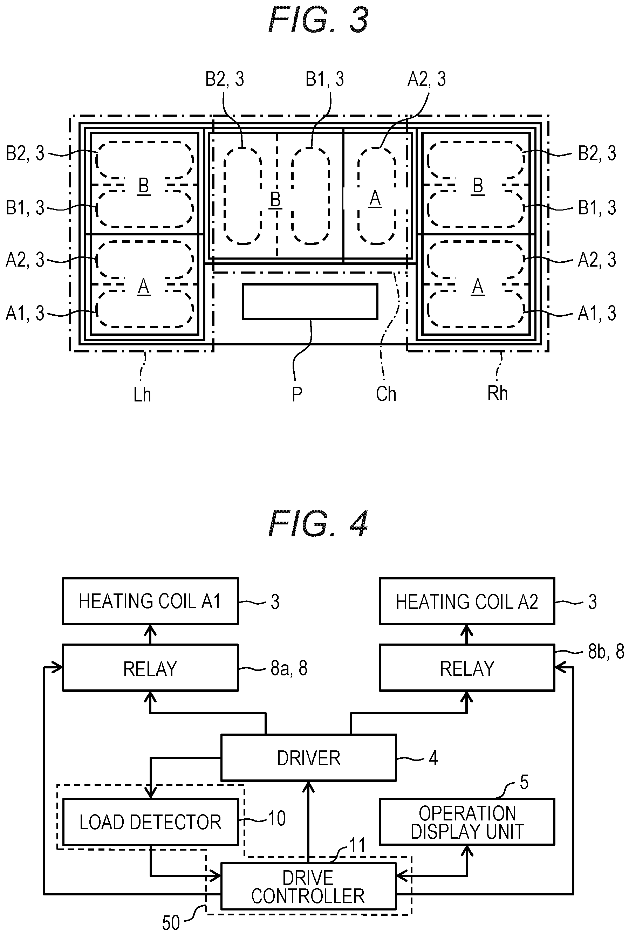

FIG. 3 is a view illustrating two sections (sections A and B) included in left heating zone Lh, right heating zone Rh, and central heating zone Ch, respectively.

As illustrated in FIG. 3, in left heating zone Lh and right heating zone Rh, section A has two heating coils 3 which are heating coil A1 and heating coil A2 arranged behind heating coil A1. Section B has two heating coils 3 which are heating coil B1 and heating coil B2 arranged behind heating coil B1.

In central heating zone Ch, section A has rightmost heating coil 3 of three heating coils 3, that is, heating coil A2. Section B has remaining two heating coils 3 which are heating coil B1 and heating coil B2 on the left of heating coil B1.

One driver 4 is provided to each section. Specifically, the induction heating cooker according to the present exemplary embodiment has six drivers 4 in total. In section A in central heating zone Ch, one driver 4 drives one heating coil 3. In other sections, one driver 4 drives two heating coils 3 through switching unit 8.

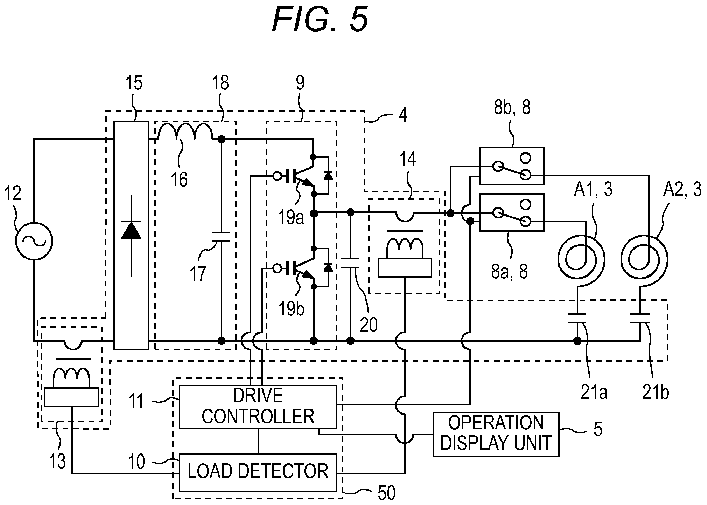

FIGS. 4 and 5 are respectively a function block diagram and a circuit block diagram regarding the section (for example, section A in left heating zone Lh) where two heating coils 3 are driven by one driver 4.

As illustrated in FIGS. 4 and 5, two heating coils 3 (heating coils A1 and A2) are connected in parallel. Switching unit 8 includes relay 8a and relay 8b that connect heating coils A1, A2 to driver 4 or disconnect heating coils A1, A2 from driver 4 under control of drive controller 11. Relays 8a, 8b are mechanical relays or semiconductor relays.

Driver 4 converts a power from commercial power source 12 into a high frequency power. Driver 4 supplies the high frequency power to heating coils A1 and A2 through relay 8a, relay 8b, respectively.

Load detector 10 determines whether a load is placed above heating coil A1 and heating coil A2 based on an input current and an output current which have been detected. Drive controller 11 controls driver 4 according to the determination. In the present exemplary embodiment, load detector 10 and drive controller 11 constitute controller 50.

Driver 4 includes diode bridge 15, filter circuit 18, inverter 9, snubber capacitor 20, resonant capacitors 21a and 21b, input current detector 13, and output current detector 14.

Diode bridge 15 rectifies an alternating-current power from commercial power source 12 and outputs a direct-current power. Filter circuit 18 has choke coil 16 and capacitor 17 to filter the rectified direct-current power.

Inverter 9 is configured such that switching element 19a at a high-voltage side and switching element 19b at a low-voltage side are connected in series. An insulated gate bipolar transistor (IGBT) is used for switching elements 19a and 19b. Reverse conducting diodes are connected in parallel with switching elements 19a and 19b, respectively. Inverter 9 is connected across capacitor 17. Drive controller 11 controls switching elements 19a and 19b.

Resonant capacitor 21a is connected in series with heating coil A1 and constitutes a resonant circuit together with heating coil A1. Resonant capacitor 21b is connected in series with heating coil A2 and constitutes a resonant circuit together with heating coil A2.

Snubber capacitor 20 reduces a switching loss generated when switching elements 19a and 19b are turned off. Snubber capacitor 20 is connected in parallel with switching element 19b.

Input current detector 13 is an electric signal detector, at an input side of driver 4, for detecting a current supplied to diode bridge 15. Output current detector 14 is an electric signal detector, at an output side of driver 4, for detecting a current flowing through inverter 9. Due to these electric signal detectors, voltage values, current values, and power values obtained through calculation are detected.

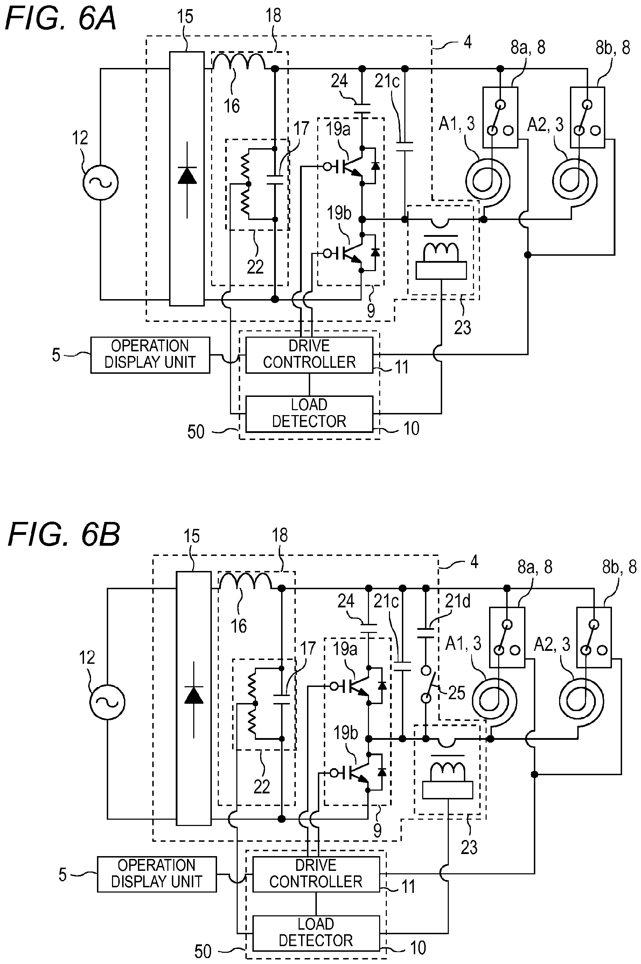

FIG. 6A is a circuit block diagram illustrating a first modification of the circuit block diagram illustrated in FIG. 5. As illustrated in FIG. 6A, driver 4 includes resonant capacitor 21c in place of resonant capacitors 21a and 21b in the present modification. Driver 4 includes input voltage detector 22 and output current detector 23, in place of input current detector 13 and output current detector 14.

In addition, driver 4 includes clamp capacitor 24 connected in series with inverter 9 for suppressing a voltage generated in resonant capacitor 21c.

Input voltage detector 22 is an electric signal detector at an input side of driver 4. Output current detector 23 is an electric signal detector at an output side of driver 4.

Resonant capacitor 21c is connected in parallel with both heating coils A1 and A2 which are connected in parallel. Resonant capacitor 21c constitutes one resonant circuit together with heating coil A1 and constitutes another resonant circuit together with heating coil A2.

Input voltage detector 22 is an electric signal detector, at an input side of driver 4, for detecting an output voltage of filter circuit 18. Output current detector 23 is an electric signal detector, at an output side of driver 4, for detecting a current flowing through inverter 9. Load detector 10 determines whether a load is placed on top panel 2 based on detection values of input voltage detector 22 and output current detector 23.

FIG. 6B is a circuit block diagram illustrating a second modification of the circuit block diagram illustrated in FIG. 5. As illustrated in FIG. 6B, in the present modification, driver 4 has, in addition to the configuration of the first modification illustrated in FIG. 6A, a series body which is connected in parallel with resonant capacitor 21c and has resonant capacitor 21d and relay 25.

In the present modification, when relay 8a, relay 8b are both turned on, drive controller 11 turns on relay 25. Because resonant capacitor 21d is connected in parallel with resonant capacitor 21c, a combined capacitance of resonant capacitors 21c, 21d is changed to a value suitable for the present situation.

### [Load detection]

The induction heating cooker according to the present exemplary embodiment has wide heating zone H formed by arranging a plurality of heating coils 3 below top panel 2. Therefore, it is necessary to quickly and accurately detect a position of a load placed on heating zone H and identify a heating coil to be driven.

To this end, the induction heating cooker according to the present exemplary embodiment periodically executes load detection after it is started The load detection includes placement detection and position identification. The placement detection means that the induction heating cooker determines where a load is placed in heating zone H, and the position identification means that the induction heating cooker identifies heating coil 3 above which a load is placed.

A process in section A and section B in left heating zone Lh will be described below. The similar process is simultaneously performed in right heating zone Rh and central heating zone Ch.

### [Placement detection]

For the placement detection, two types of detection currents (detection current Ds1 and second detection current Ds2) for the load detection are supplied to heating coils 3 arranged in sections A and B. The current value of detection current Ds2 is larger than the current value of detection current Ds1. The current values of these detection currents are smaller than the current value of the high frequency power for inductively heating a load during cooking. Detection current Ds1 and detection current Ds2 correspond to a first detection current and a second detection current, respectively.

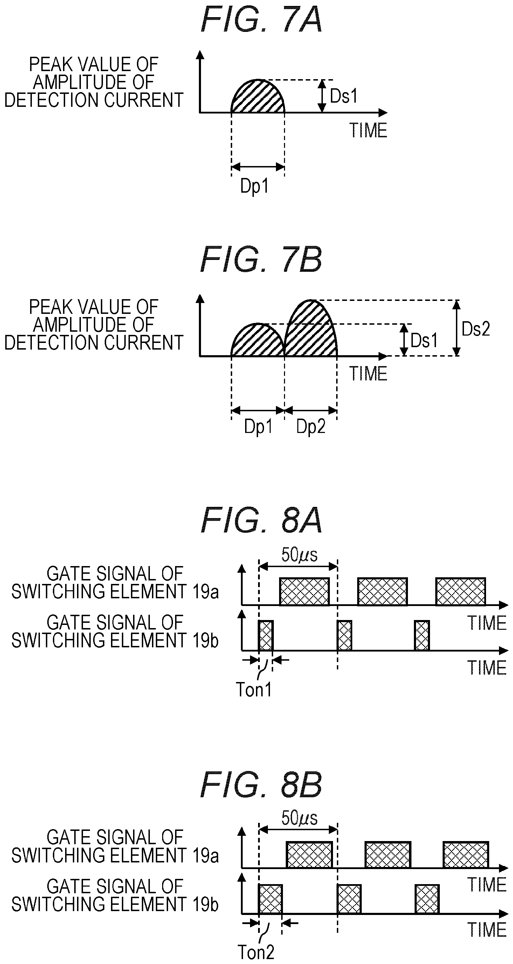

FIGS. 7A and 7B schematically illustrate a change over time in a peak value of an amplitude of the detection current supplied to heating coils 3 arranged in sections A and B for the placement detection.

As illustrated in FIG. 7A, detection current Ds1 is supplied to heating coils 3 arranged in sections A, B during detection period Dp1. Thus, a relatively large load such as a pot with a diameter of about 150 mm or more can be detected.

If a load is not detected based on detection current Ds1, detection current Ds2 is supplied to heating coils 3 arranged in sections A and B during detection period Dp2 following detection period Dp1 as illustrated in FIG. 7B. Detection period Dp1 and detection period Dp2 correspond to a first detection period and a second detection period, respectively.

FIG. 8A is a timing chart illustrating operations of switching element 19a and switching element 19b during detection period Dp1. FIG. 8B is a timing chart illustrating operations of switching elements 19a and 19b during detection period Dp2.

As illustrated in FIG. 8A, when switching element 19b is turned on for on time Ton1 during detection period Dp1, detection current Ds1 flows through heating coils 3.

As illustrated in FIG. 8B, when switching element 19b is turned on for on time Ton2 during detection period Dp2, detection current Ds2 flows through heating coils 3.

On time Ton2 is longer than on time Ton1. Detection periods Dp1, Dp2 are both 10 ms to 20 ms. Switching cycles of switching elements 19a and 19b are 50 µs. The cycle (hereinafter referred to as a detection cycle) where the load detection is executed is set to a time within 1.2 seconds to 2.0 seconds, for example. In the present exemplary embodiment, a predetermined detection cycle (detection cycle T0) is set to 1.7 seconds.

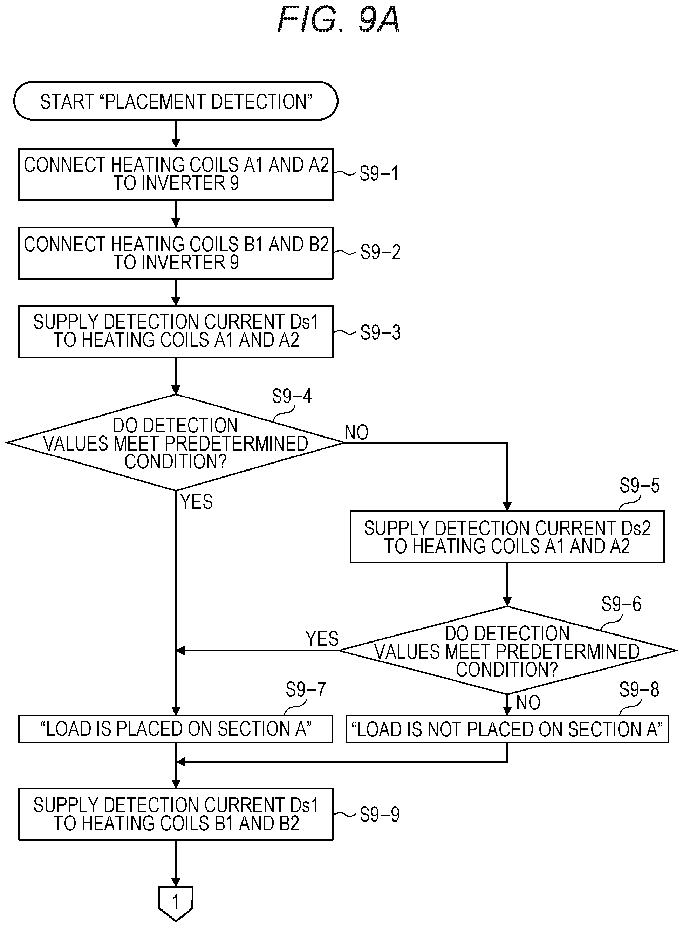

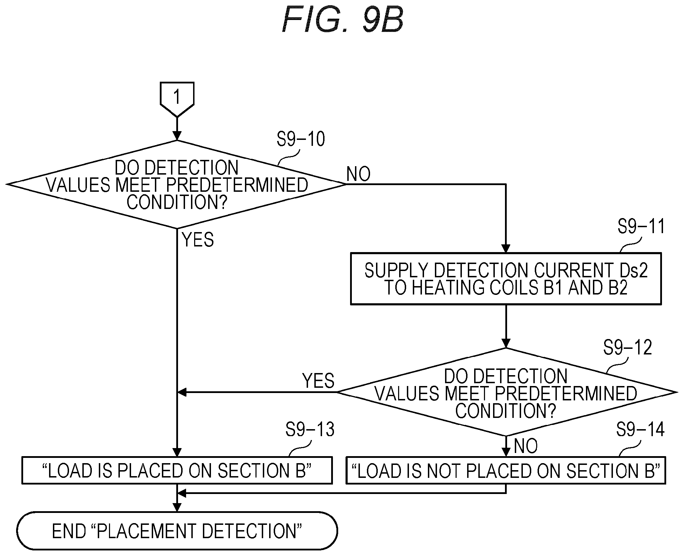

FIGS. 9A and 9B are flowcharts for the placement detection according to the present exemplary embodiment. The placement detection needs to be performed before the user issues an instruction to start heating to operation display unit 5. In the present exemplary embodiment, when the induction heating cooker is started, the placement detection begins. The induction heating cooker may be provided with a proximity sensor such that the placement detection begins when the proximity sensor detects an approach of a person near the induction heating cooker.

As illustrated in FIG. 9A, in step S9-1, drive controller 11 turns on a relay (if there is one) which has been in an off state from among relays 8a, 8b in section A to connect heating coils A1 and A2 in section A to inverter 9. In step S9-2, drive controller 11 turns on a relay (if there is one) which has been in an off state from among relays 8a, 8b in section B to connect heating coils B1 and B2 in section B to inverter 9.

Before the placement detection is performed, all relays in left heating zone Lh are turned on, and all heating coils 3 are connected to inverter 9.

In step S9-3, detection current Ds1 is supplied to heating coils A1 and A2 for on time Ton1 which is a first predetermined time during detection period Dp1 (10 ms to 20 ms).

In step S9-4, load detector 10 performs a predetermined determination for the detection values of input current detector 13 and output current detector 14 in section A.

When the result in step S9-4 is Yes, load detector 10 determines that a load is placed on section A in step S9-7.

When the result in step S9-4 is No, detection current Ds2 is supplied to heating coils A1 and A2 for on time Ton2 which is a second predetermined time during detection period Dp2 (10 ms to 20 ms) in step S9-5.

In step S9-6, load detector 10 performs a determination similar to the determination in step S9-4 for the detection values of input current detector 13 and output current detector 14.

When the result in step S9-6 is Yes, load detector 10 determines that a load is placed on section A in step S9-7. When the result in step S9-6 is No, load detector 10 determines that a load is not placed on section A in step S9-8.

The determination for the placement detection in steps S9-4 and S9-6 is performed based on the detection values of input current detector 13 and output current detector 14.

Specifically, load detector 10 has a first threshold that is a threshold for input current detector 13 and a second threshold that is a threshold for output current detector 14. Load detector 10 detects that the detection value of input current detector 13 is equal to or larger than the first threshold and the detection value of output current detector 14 is equal to or larger than the second threshold.

When either of the detection values becomes equal to or larger than the threshold, load detector 10 determines that the placed load occupies an area of a predetermined proportion (for example, 40%) or more of heating zone H facing heating coils A1 and A2.

The determination for the placement detection may be performed based on a change in two consecutive detection values of each of input current detector 13 and output current detector 14, in addition to or in place of the determination based on the detection values themselves as described above.

The threshold used in step S9-4 may be the same as or different from the threshold used in step S9-6.

Similarly, in the modifications illustrated in FIGS. 6A and 6B, the determination for the placement detection is performed based on detection values of input voltage detector 22 and output current detector 23 and/or a change in two consecutive detection values of each of input voltage detector 22 and output current detector 23.

As described above, the current value of detection current Ds1 is smaller than the current value of detection current Ds2. Therefore, a load detected during detection period Dp2 is smaller than a load detected during detection period Dp1. A small pot with a minimum diameter of 110 mm corresponds to the load detected during detection period Dp2, but a metal material (for example, knife or fork) of smaller than 100 mm x 20 mm x 1.0 mm does not correspond to the load detected during detection period Dp2.

Next, load detector 10 determines whether a load is placed in section B. The placement detection for section B is substantially the same as the placement detection for section A.

In step S9-9, detection current Ds1 is supplied to heating coils B1 and B2, which are connected in parallel, for on time Ton1 which is a first predetermined time during detection period Dp1 (10 ms to 20 ms). The process proceeds to FIG. 9B.

In step S9-10, load detector 10 performs a determination similar to the determination in step S9-4 in FIG. 9A for the detection values of input current detector 13 and output current detector 14.

When the result in step S9-10 is Yes, load detector 10 determines that a load is placed on section B in step S9-13.

When the result in step S9-10 is No, detection current Ds2 is supplied to heating coils B1 and B2, which are connected in parallel, for on time Ton2 which is a second predetermined time during detection period Dp2 (10 ms to 20 ms) in step S9-11.

In step S9-12, load detector 10 performs a determination similar to the determination in step S9-4 in FIG. 9A for the detection values of input current detector 13 and output current detector 14.

When the result in step S9-12 is Yes, load detector 10 determines that a load is placed on section B in step S9-13. When the result in step S9-12 is No, load detector 10 determines that a load is not placed on section B in step S9-14.

The determination in steps S9-10 and S9-12 is performed in a similar manner as in steps S9-4 and S9-6, respectively.

The placement detection is periodically executed. Therefore, when a large high frequency current is used for the placement detection, a large leakage magnetic field may be generated from heating coils 3 in a section where a load is not placed. Heating coils 3 in a section where a load is placed may unnecessarily heat the load.

In the present exemplary embodiment, detection current Ds1 is supplied to heating coil 3 for a short time (on time Ton1). Thus, a load with a certain size can be accurately detected in a short time with less energy. When a load is not detected based on detection current Ds1, the placement detection is again performed using detection current Ds2, whereby a relatively small load can be detected.

Besides the circuit configurations illustrated in FIGS. 5, 6A, and 6B, the induction heating device according to the present exemplary embodiment may have a configuration for driving one heating coil by one driver 4. The induction heating device according to the present exemplary embodiment may have a configuration for driving three or more heating coils 3 by one driver 4 through switching unit 8.

### [Position identification]

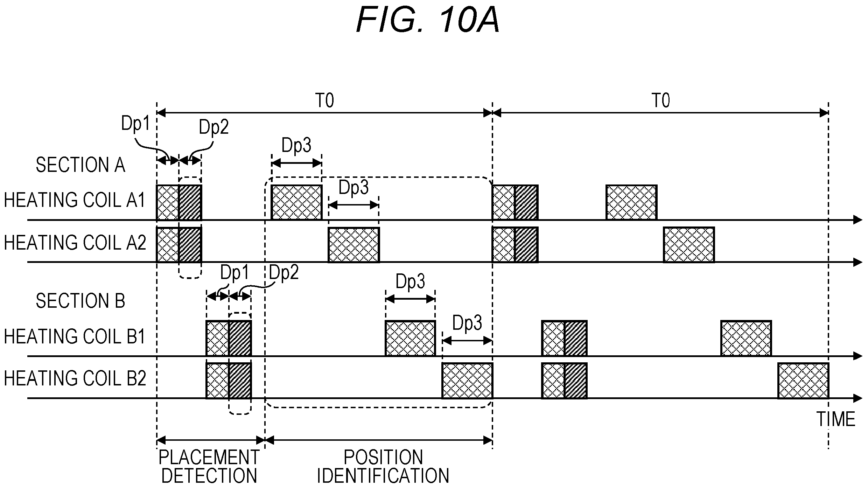

FIG. 10A is a timing chart for placement detection and position identification in sections A and B in left heating zone Lh. As illustrated in FIG. 10A, in the present exemplary embodiment, the placement detection and position identification are repeatedly performed at predetermined detection cycle T0. In detection cycle T0, the placement detection is sequentially and independently performed for sections A and B.

Then, the position identification is performed for heating coil A1 in section A, heating coil A2 in section A, heating coil A1 in section B, and heating coil A2 in section B in this order. Switching units 8 in sections A and B switch connection such that the relay corresponding to heating coil 3 to be supplied with detection current Ds3 is turned on during detection period Dp3. Detection current Ds3 corresponds to a third detection current.

After detection current Ds3 is supplied to heating coil A2, relay 8b in section A is kept on. After detection current Ds3 is supplied to heating coil B2, relay 8b in section B is kept on.

In the present exemplary embodiment, detection period Dp3 is 200 ms Switching cycles of switching elements 19a and 19b are 50 µs. Detection cycle T0 is set to be a time within 1.2 seconds to 2.0 seconds. Detection cycle T0 is set to be 1.7 seconds. Detection period Dp3 corresponds to a third detection period.

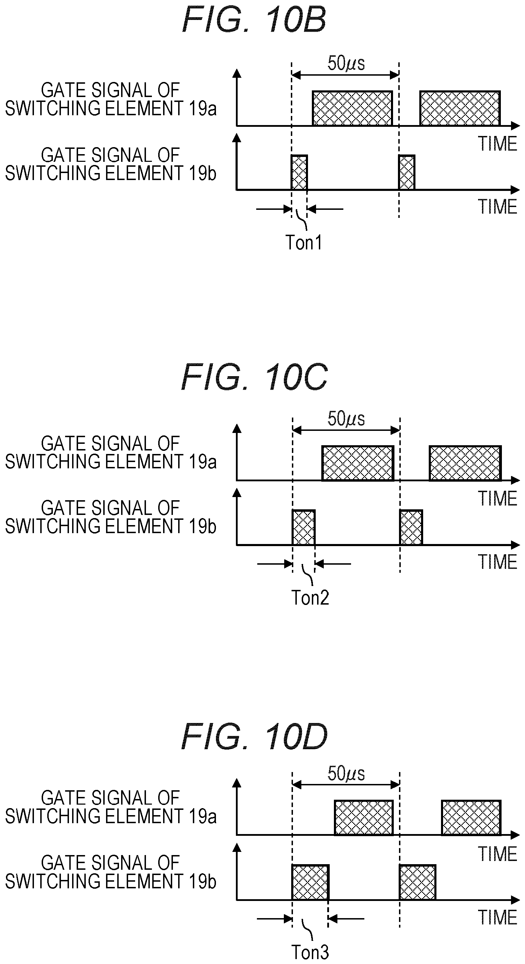

Signals illustrated in FIG. 10B are the same as the signals in FIG. 8A, and they are gate signals input to switching elements 19a and 19b during detection period Dp1 (see FIG. 10A) for the placement detection. In FIG. 10B, on time Ton1 is 5 µs, and switching cycles of switching elements 19a and 19b are 50 µs.

Signals illustrated in FIG. 10C are the same as the signals in FIG. 8B, and they are gate signals input to switching elements 19a and 19b during detection period Dp2 (see FIG. 10A) for the placement detection. In FIG. 10C, on time Ton2 is 9 µs, and switching cycles of switching elements 19a and 19b are 50 µs.

Signals illustrated in FIG. 10D are gate signals input to switching elements 19a and 19b during detection period Dp3 (see FIG. 10A) for the position identification.

In FIG. 10D, on time Ton3 of switching element 19b is gradually increased to a predetermined maximum value. The maximum value of on time Ton3 is longer than on time Ton2. When the identification of a zone is ended until on time Ton3 reaches the maximum value, the increase in on time Ton3 is stopped.

In the present exemplary embodiment, one cycle of the switching operation of switching elements 19a and 19b is 50 µs. On time Ton3 corresponds to a third predetermined time. Note that detection current Ds3 increases with the increase in on time Ton3.

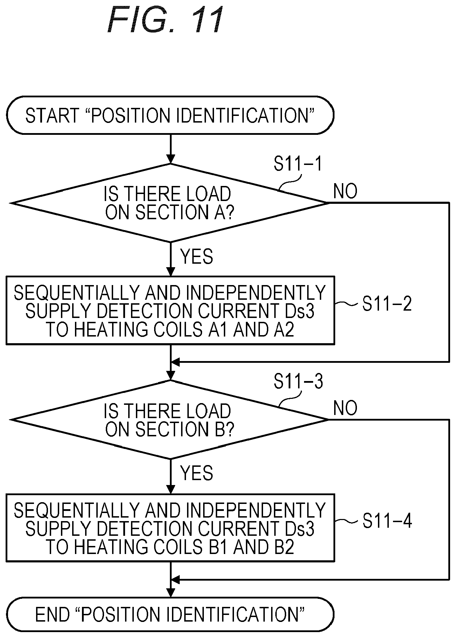

FIG. 11 is a flowchart for position identification according to the present exemplary embodiment. In a case where it is determined that a load is placed in either section A or B as a result of the placement detection, the position identification is started.

As illustrated in FIG. 11, when the result of the placement detection illustrated in FIG. 9A shows that "a load is placed on section A" in step S11-1, the process proceeds to step S11-2. If not, the process proceeds to step S11-3.

In step S11-2, detection current Ds3 is sequentially and independently supplied to heating coils A1 and A2. Load detector 10 performs position identification in section A by determining whether the load is placed above each of heating coils A1 and A2.

As in the placement detection described above, the determination for the position identification in step S11-2 is performed based on detection values of input current detector 13 and output current detector 14 and/or a change in two consecutive detection values of each of input current detector 13 and output current detector 14.

After the position identification for section A, position identification for section B is performed in steps S11-3 and S11-4 in a similar manner as in steps S11-1 and S11-2.

Operation display unit 5 causes a portion of operation display area P corresponding to the load placement condition in heating zone H to emit light. This is a state where the load detection is finished for all heating coils 3 before the start of inducting heating. A load placement condition may be merely referred to as a placement condition below.

In this state, drive controller 11 turns on relays 8a, 8b in all switching units 8. Thus, the load detection can be executed in an area where a load is not placed in heating zone H, and the load detection is continuously executed in an area where the load is placed in heating zone H.

Accordingly, when a change in the placement condition occurs in an area where the load is placed in heating zone H, this change can be detected. The change in the placement condition means that the load is moved, removed, or added.

In a case where a load is placed above heating coil A1 and a load is not placed above heating coil A2 in a state where heating coils A1, A2 are both connected to inverter 9, for example, relay 8b is turned off to disconnect heating coil A2 from inverter 9.

This operation is performed when the same detection result is obtained a predetermined number of times in a row after the above condition is determined. This is because, if this operation is performed just after the above condition is detected, heating coil A2 is disconnected from inverter 9 only when the user picks up the load and immediately places this load again, for example.

For example, when a change in a predetermined amount or more occurs in the detection value of the electric signal detector in a state where switching unit 8 disconnects heating coil A1 from inverter 9 and connects heating coil A2 to inverter 9 in section A, the load detection is sequentially and independently performed for heating coils A1, A2.

If the result is the same before the change in the detection value is detected, load detector 10 determines that there is no change in the placement condition, and switching unit 8 returns to the state same as the state before the change in the detection value is detected, that is, to the state where heating coil A1 is disconnected from inverter 9 and heating coil A2 is connected to inverter 9. This is because the change in the detection value is highly likely caused by a slight movement of the load which does not need to change heating coil 3 to be driven.

If the result is different from the values before the change in the detection values is detected, heating coil A1 and heating coil A2 are both connected to inverter 9 to execute the load detection.

According to the present exemplary embodiment, the operations of relays 8a, 8b can be reduced as much as possible. In a case where relays 8a, 8b are of mechanical type, generation of a switching sound can be suppressed.

When the load detection for all heating coils 3 is finished, drive controller 11 turns on relays 8a, 8b in all switching units 8 for connecting all heating coils 3 to inverter 9.

As described above, according to the induction heating device in the present exemplary embodiment, controller 50 causes driver 4 to supply detection current Ds1 which is a high frequency power to heating coils A1 and A2. Controller 50 determines whether a load is placed above heating coils A1 and A2 based on a change in an electric signal.

When determining that a load is not placed above the heating coils A1 and A2, controller 50 causes driver 4 to supply detection current Ds2 which is a high frequency power and has a larger current value than detection current Ds1 to heating coils A1 and A2.

Controller 50 determines whether a load is placed above heating coils A1 and A2 based on a change in an electric signal.

When detection current Ds1 or Ds2 is supplied, controller 50 causes switching unit 8 to connect both heating coils A1 and A2 to driver 4. Controller 50 determines whether a load is placed above heating coils A1 and A2 based on a change in an electric signal.

When determining that a load is placed above heating coils A1 and A2, controller 50 controls driver 4 and switching unit 8 such that detection current Ds3 which is a high frequency power is sequentially and independently supplied to each of heating coils A1 and A2. Controller 50 determines whether the load is placed above each of heating coils A1 and A2.

In the induction heating device according to the present exemplary embodiment, top panel 2 has left heating zone Lh, central heating zone Ch, and right heating zone Rh, these heating zones have sections A and B, and heating coils A1 and A2 and driver 4 are provided for section A which is one of sections A and B.

Therefore, a position of a load placed on heating zone H can be quickly and accurately detected, and a heating coil to be driven can be identified.

In addition, in the induction heating device according to the present exemplary embodiment, controller 50 controls driver 4 and switching unit 8 such that detection currents Ds1 and Ds2 are supplied to heating coils A1 and A2, and controller 50 determines whether a load is placed above heating coils A1 and A2 based on a change in an electric signal.

When determining that a load is placed above heating coils A1 and A2, controller 50 controls driver 4 and switching unit 8 such that detection current Ds3 is sequentially and independently supplied to each of heating coils A1 and A2, thereby determining whether the load is placed above each of heating coils A1 and A2.

After performing the determination for heating coils A1 and A2, controller 50 causes switching unit 8 to connect heating coils A1 and A2 to the driver.

In the present exemplary embodiment, a microcomputer constitutes load detector 10 and drive controller 11. The present disclosure is not limited thereto. However, if a programmable microcomputer is used, a processing content can easily be changed, and thus, a degree of freedom in design can be enhanced.

It is also possible that, to increase a processing speed, load detector 10 and drive controller 11 are composed of a logic circuit. Load detector 10 and drive controller 11 may be physically composed of one or more elements. In a case where load detector 10 and drive controller 11 are each composed of a plurality of elements, each item may correspond to one element. In this case, it can be considered that these elements correspond to load detector 10 and drive controller 11, respectively.

### (Second Exemplary Embodiment)

Hereinbelow, position identification of an induction heating cooker according to a second exemplary embodiment of the present disclosure will be described.

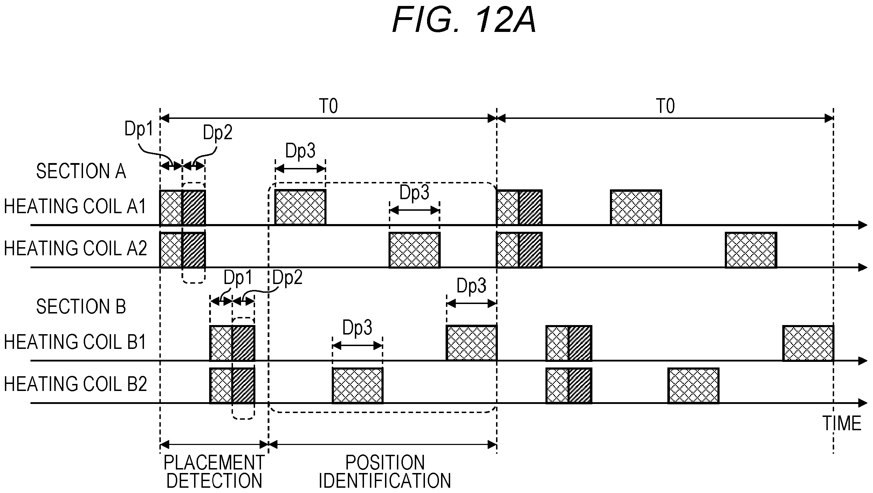

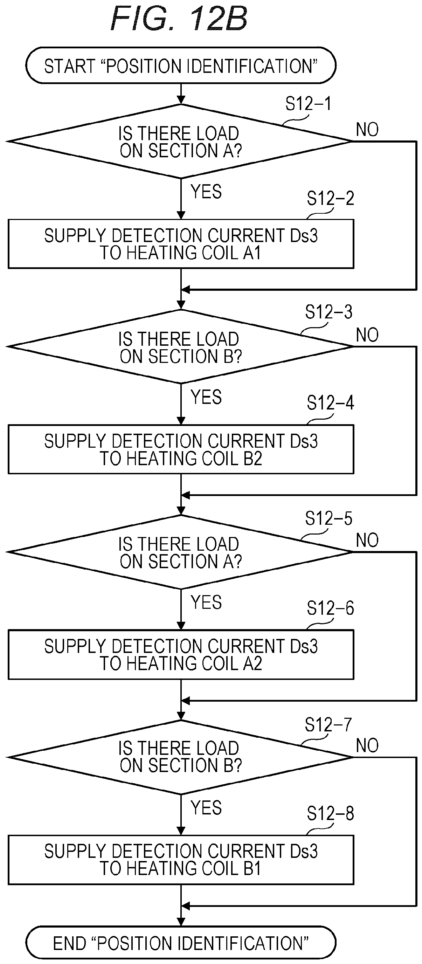

The induction heating cooker in the present exemplary embodiment has the same configuration as in the first exemplary embodiment, and performs the same placement detection as the placement detection in the first exemplary embodiment. The present exemplary embodiment is different from the first exemplary embodiment in that position identification illustrated in FIGS. 12A and 12B is performed in place of the position identification in FIGS. 10A and 11. The position identification according to the present exemplary embodiment is a modification of the position identification in the first exemplary embodiment.

In the present exemplary embodiment, a process in section A and section B in left heating zone Lh will be described, as in the first exemplary embodiment. The similar process is simultaneously performed in right heating zone Rh and central heating zone Ch.

### [Modification of position identification]

FIG. 12A is a timing chart for placement detection and position identification in sections A and B in left heating zone Lh. In FIG. 12A, only the order of the position identification is different from that in FIG. 10A.

Specifically, in FIG. 10A, the position identification is performed in the order of heating coil A1, heating coil A2, heating coil B1, and heating coil B2. However, in the present exemplary embodiment, the position identification is performed in the order of heating coil A1, heating coil B2, heating coil A2, and heating coil B1 as illustrated in FIG. 12A. Switching units 8 in sections A and B switch connection such that the relay corresponding to heating coil 3 to be supplied with detection current Ds3 is turned on during detection period Dp3.

After detection current Ds3 is supplied to heating coil A2, relay 8b in section A is kept on. After detection current Ds3 is supplied to heating coil B1, relay 8a in section B is kept on.

Gate signals input to switching elements 19a and 19b during detection periods Dp1, Dp2, and Dp3 are the same as those in FIGS. 10B, 10C, and 10D.

FIG. 12B is a flowchart for position identification according to the present exemplary embodiment. As illustrated in FIG. 12B, when the result of the placement detection illustrated in FIG. 9A shows that "a load is placed on section A" in step S12-1, the process proceeds to step S12-2. If not, the process proceeds to step S12-3.

In step S12-2, detection current Ds3 is supplied to heating coil A1. Load detector 10 determines whether the load is placed above heating coil Al.

When the result of the placement detection illustrated in FIG. 9A shows that "a load is placed on section B" in step S12-3, the process proceeds to step S12-4. If not, the process proceeds to step S12-5.

In step S12-4, detection current Ds3 is supplied to heating coil B2. Load detector 10 determines whether the load is placed above heating coil B1.

When the result of the placement detection illustrated in FIG. 9A shows that "a load is placed on section A" in step S12-5, the process proceeds to step S12-6. If not, the process proceeds to step S12-7.

In step S12-6, detection current Ds3 is supplied to heating coil A2. Load detector 10 determines whether the load is placed above heating coil A2.

When the result of the placement detection illustrated in FIG. 9A shows that "a load is placed on section B" in step S12-7, the process proceeds to step S12-8. If not, the process of the position identification is ended.

In step S12-8, detection current Ds3 is supplied to heating coil B1. Load detector 10 determines whether the load is placed above heating coil B2. Thus, the process of the position identification is ended.

As in the first exemplary embodiment, the determination for the position identification in steps S12-2, S12-4, S12-6, and S12-8 is performed based on detection values of input current detector 13 and output current detector 14 and/or a change in two consecutive detection values of each of input current detector 13 and output current detector 14.

According to these determinations, the position identification in sections A and B is performed.

According to the present exemplary embodiment, a detection current is supplied to section A and section B from corresponding drivers 4, respectively. Therefore, detection period Dp3 for heating coil B1 in section B can be overlapped with detection period Dp3 for heating coil A1 in section A, for example. Accordingly, the detection cycle can be shortened.

As described above, after detection current Ds3 is supplied to heating coil A2, relay 8b in section A is kept on. After detection current Ds3 is supplied to heating coil B1, relay 8a in section B is kept on. Therefore, when a load is placed across heating coils A2, B1, heating coils A2, B1 can be immediately driven without switching the connection of switching units 8 after the end of the position identification.

### (Third Exemplary Embodiment)

Hereinbelow, a change in a detection cycle in an induction heating cooker according to a third exemplary embodiment of the present disclosure will be described. According to the present exemplary embodiment, a detection cycle is changed in addition to the load detection illustrated in FIGS. 7A to 11 with the configuration similar to the configuration according to the first exemplary embodiment illustrated in FIGS. 1 to 5.

### [Change in detection cycle]

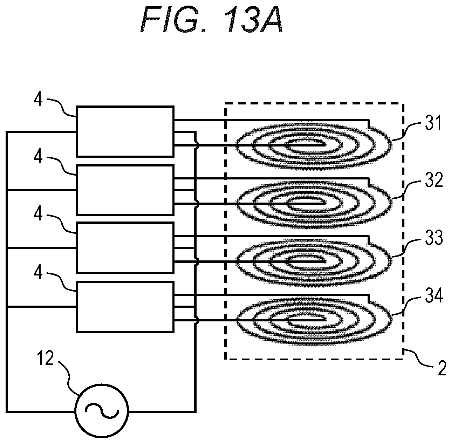

FIG. 13A is a block diagram of an induction heating cooker for describing a concept of changing a detection cycle according to the present exemplary embodiment. As illustrated in FIG. 13A, the induction heating cooker for describing the concept is of a multi-coil type having four heating coils (heating coils 31 to 34) arrayed in line below top panel 2 and four drivers 4 driving the respective heating coils.

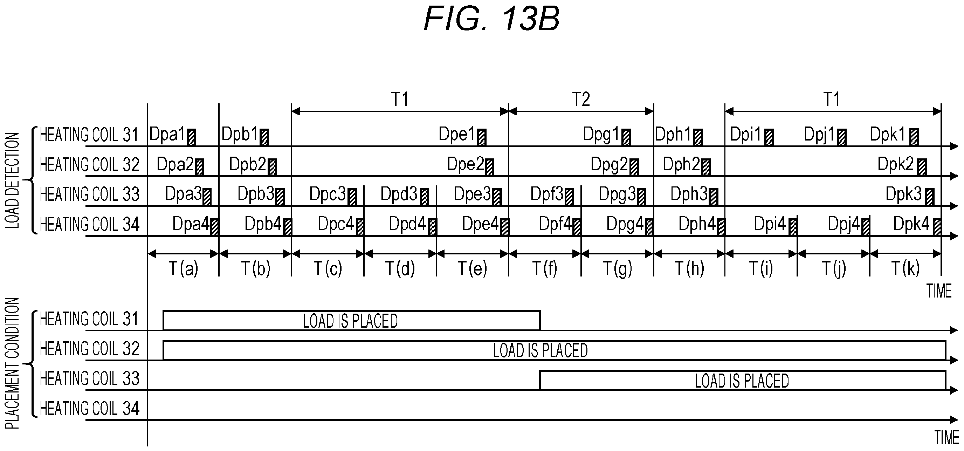

FIG. 13B is a timing chart for describing the concept of changing a detection cycle in the induction heating cooker illustrated in FIG. 13A.

The upper half of FIG. 13B shows detection periods Dpa1 to Dpk1, Dpa2 to Dpk2, Dpa3 to Dpk3, and detection periods Dpa4 to Dpk4 in which the placement detection is performed for heating coils 31 to 34 in detection cycles T(a) to T(k). The length of each of detection cycles T(a) to T(k) is equal to detection cycle T0 described above.

During these detection periods, load detector 10 detects whether a load is placed above heating coils 31 to 34 as in the placement detection performed during detection period Dp1 illustrated in FIG. 12A.

The lower half of FIG. 13B shows whether a load is placed above heating coils 31 to 34. Specifically, the lower half of FIG. 13B shows that the load which has been placed above heating coils 31 and 32 is moved to a location above heating coils 32 and 33.

Therefore, as illustrated in the upper half of FIG. 13B, it is detected in detection cycles T(a), T(b) that the load is placed above heating coils 31 and 32. In response to this result, regarding heating coils 31 and 32, a detection period is not provided in detection cycles T(c), T(d), and a detection period is provided in detection cycle T(e).

Specifically, when the placement of a load is detected twice in a row, the detection cycle is extended. In FIG. 13B, the detection cycle is extended to detection cycle T1 which is three times as long as detection cycle T0.

Next, a change in the detection cycle when a load is moved will be described.

As illustrated in the lower half of FIG. 13B, when the load which has been placed above heating coils 31 and 32 is moved to a location above heating coils 32 and 33 in detection cycle T(f), load detector 10 detects that the load is placed above heating coil 33 during detection period Dpf3 (see the upper half of FIG. 13B) for heating coil 33.

In response to this result, regarding heating coils 31 to 34, a detection period is provided and the placement detection is performed in detection cycle T(g). That is, the detection cycle for heating coils 31 and 32 which has been detection cycle T1 is shortened to detection cycle T2. Accordingly, load detector 10 detects that the load which has been placed above heating coils 31 and 32 is moved to a location above heating coils 32 and 33.

Regarding heating coils 31 to 34, a detection period is provided and the placement detection is performed in detection cycles T(g), T(h). When the placement of the load is detected twice in a row, a detection period is not provided in detection cycles T(i), T(j), and a detection period is provided in detection cycle T(k), for heating coils 32 and 33. That is, the detection cycle for heating coils 32 and 33 is extended to detection cycle T1 which is three times as long as detection cycle T0.

According to the concept of changing the detection cycle, in the multi-coil induction heating cooker, the placement detection is performed every detection cycle T1 for heating coils above which a load is detected to be placed. For heating coils above which a load is not detected to be placed, the load detection is performed at detection cycle T0.

When it is detected that a load is placed above heating coils above which a load has not been placed, a detection period is provided for all heating coils in the following detection cycle. That is, the detection cycle is shortened. If there is no change in the placement condition afterward for the heating coil above which it has been detected that another load is placed, the detection cycle is again extended.

According to the concept of changing the detection cycle, a frequency of the placement detection is reduced for the load which has already been recognized. Thus, generation of heat from the load by the detection current can be suppressed. In a case where a plurality of heating coils are driven by one driver through a switching unit, the switching operation of the switching unit can be reduced.

A change in the detection cycle when the above concept is applied to the induction heating cooker having the circuit configuration illustrated in FIG. 5 will be described below.

In the present exemplary embodiment, a process in section A and section B in left heating zone Lh will be described, as in the first and second exemplary embodiments. The similar process is simultaneously performed in right heating zone Rh and central heating zone Ch.

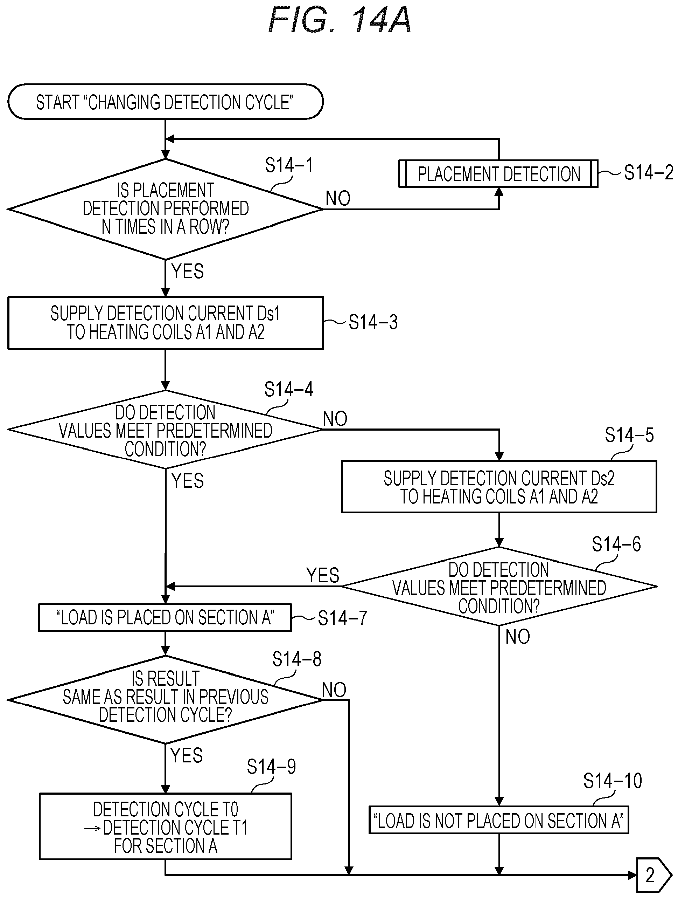

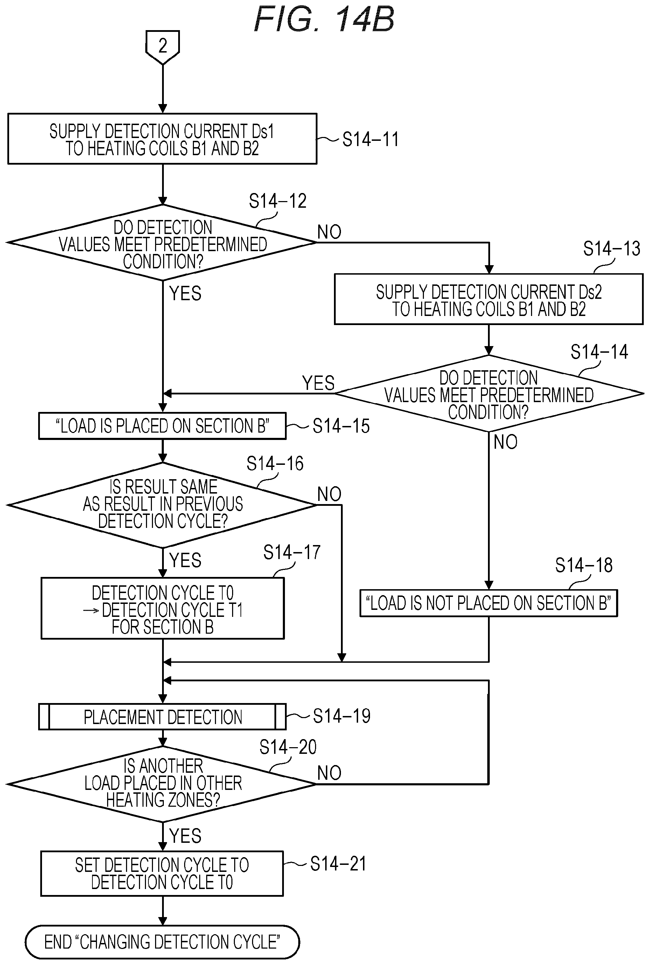

FIGS. 14A and 14B are flowcharts for changing a detection cycle according to the present exemplary embodiment. The change in the detection cycle illustrated in FIGS. 14A and 14B is executed after the execution of the load detection including the above placement detection and, if necessary, the above position identification.

As illustrated in FIGS. 14A and 14B, in step S14-1, drive controller 11 determines whether the placement detection is performed a predetermined number of times (N times, for example, five times) in a row. In step S14-2, the placement detection illustrated in FIGS. 9A and 9B is performed until the number of times of the placement detection becomes N. When the placement detection is performed N times in a row, the process proceeds to step S14-3.

In step S14-3, detection current Ds1 is supplied to heating coils A1 and A2 for on time Ton1 during detection period Dp1.

In step S14-4, load detector 10 performs a determination similar to the determination in step S9-4 in FIG. 9A for the detection values of input current detector 13 and output current detector 14 for section A. With this process, a relatively large load such as a pot with a diameter of about 150 mm or more is detected.

When the result in step S14-4 is No, that is, when a load is not detected based on detection current Ds1, detection current Ds2 is supplied to heating coils A1 and A2 for on time Ton2 during detection period Dp2 in step S14-5.

In step S14-6, load detector 10 performs a determination similar to the determination in step S9-4 in FIG. 9A for the detection values of input current detector 13 and output current detector 14 for section A. When the result in step S14-6 is No, load detector 10 determines that a load is not placed on section A in step S14-10. The process proceeds to FIG. 14B.

On the other hand, when the result in step S14-4 or S14-6 is Yes, load detector 10 determines that a load is placed on section A in step S14-7. In step S14-8, load detector 10 determines whether the result of the latest placement detection is the same as the result in the previous detection cycle.

When the result in step S14-8 is Yes, the detection cycle for section A is extended to detection cycle T1 from detection cycle T0 in step S14-9. In the present exemplary embodiment, detection cycle T1 is 8 seconds. Then, the process proceeds to FIG. 14B. When the result in step S14-8 is No, the process proceeds to FIG. 14B.

In steps S14-11 to S14-18 in FIG. 14B, processes similar to the processes in steps S14-3 to S14-10 are performed for section B.

In step S14-11, detection current Ds1 is supplied to heating coils B1 and B2 for on time Ton1 during detection period Dp1.

In step S14-12, load detector 10 performs a determination similar to the determination in step S9-4 in FIG. 9A for the detection values of input current detector 13 and output current detector 14 for section B.

When the result in step S14-12 is No, that is, when a load is not detected based on detection current Ds1, detection current Ds2 is supplied to heating coils B1 and B2 for on time Ton2 during detection period Dp2 in step S14-13.

In step S14-14, load detector 10 performs a determination similar to the determination in step S9-4 in FIG. 9A for the detection values of input current detector 13 and output current detector 14 for section B.

When the result in step S14-14 is No, that is, when a load is not detected even based on detection current Ds2, load detector 10 determines that a load is not placed on section B in step S14-18. Then, the process proceeds to step S14-19.

On the other hand, when the result in step S14-12 or S14-14 is Yes, that is, when a load is detected based on detection current Ds1 or Ds2, load detector 10 determines that the load is placed on section B in step S14-15. In step S14-16, load detector 10 determines whether the result of the latest placement detection is the same as the result in the previous detection cycle.

When the result in step S14-16 is Yes, the detection cycle for section B is extended to detection cycle T1 from detection cycle T0 in step S14-17. Then, the process proceeds to step S14-19. When the result in step S14-16 is No, the process proceeds to step S14-19.

In step S14-19, the placement detection is performed. In step S14-20, load detector 10 determines whether there is a change in the placement condition regarding other heating zones, for example, central heating zone Ch.

When the result in step S14-20 is No, the placement detection is performed every determined detection cycle. When the result in step S14-20 is Yes, drive controller 11 sets the detection cycle to detection cycle T0 in step S14-21. That is, if the detection cycle has been set to detection cycle T1, the detection cycle is returned to detection cycle T0.

According to the change in the detection cycle in the present exemplary embodiment, when load detector 10 determines that a load is placed on section A or B N times (for example, five times) in a row as a result of the placement detection performed every detection cycle T0, drive controller 11 extends the detection cycle for heating coils in this section to detection cycle T1 from detection cycle T0.

According to the change in the detection cycle in the present exemplary embodiment, the placement detection is executed every extended detection cycle T1 for the section where a load is placed. For the section where a load is not placed, the placement detection is executed every detection cycle T0.

When load detector 10 newly detects that a load is placed in another heating zone (for example, central heating zone Ch) where a load has not been placed, after the change in the detection cycle, drive controller 11 resets the detection cycle which has been set to detection cycle T1 to detection cycle T0.

According to the change in the detection cycle in the present exemplary embodiment, a frequency of the placement detection is reduced for the load which has already been recognized. Thus, generation of heat from the load by the detection current can be suppressed.

In a case where a plurality of heating coils are driven by one driver through a switching unit, the switching operation of the switching unit can be reduced. Thus, sound generation during switching of relays can be suppressed.

As described in the first exemplary embodiment, in a case where a load is placed above heating coil A1 and a load is not placed above heating coil A2, for example, relay 8b is turned off to disconnect heating coil A2 from inverter 9.

However, in this case as well, relay 8b may be turned on to connect heating coil A2 to inverter 9, and the detection cycle for heating coil A2 may be extended in a similar manner as the detection cycle for heating coil A1. Thus, sound generation during switching of relays can be suppressed.

According to the present exemplary embodiment, when a load is moved, a heating coil to be driven can quickly be identified.

The above is the description of changing the detection cycle when a load is moved in the heating zone (left heating zone Lh in the above description). In a case where the load which has been placed in the heating zone is removed or a load is added to the heating zone, the detection cycle is similarly changed.

### (Fourth Exemplary Embodiment)

Hereinbelow, confirmation of a placement condition in an induction heating cooker according to a fourth exemplary embodiment of the present disclosure will be described. According to the present exemplary embodiment, a placement condition is confirmed in addition to the load detection illustrated in FIGS. 7A to 11, 14A, and 14B with the configuration similar to the configuration according to the first exemplary embodiment illustrated in FIGS. 1 to 5.

### [Confirmation of placement condition]

A concept of confirming a placement condition according to the present exemplary embodiment will be described using the induction heating cooker illustrated in FIG. 13A, as in the description for a change in the detection cycle.

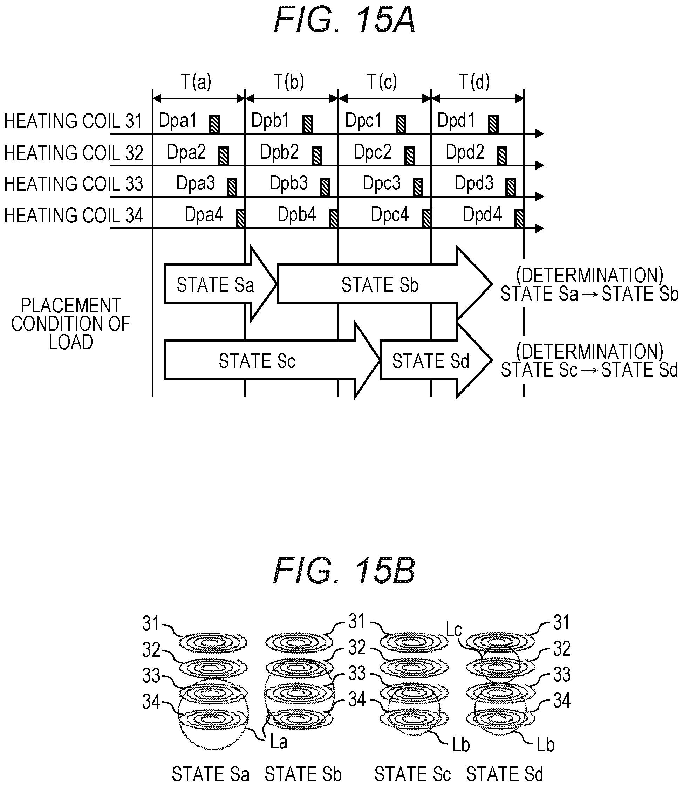

FIG. 15A is a timing chart for describing the concept of confirming a placement condition according to the fourth exemplary embodiment.

The upper half of FIG. 15A shows detection periods Dpa1 to Dpd1, Dpa2 to Dpd2, Dpa3 to Dpd3, and detection periods Dpa4 to Dpd4 in which the placement detection is performed for heating coils 31 to 34 in detection cycles T(a) to T(d). The length of each of detection cycles T(a) to T(d) is equal to detection cycle T0 described above.

During these detection periods, load detector 10 determines whether a load is placed above heating coils 31 to 34 as in the placement detection performed during detection period Dp1 illustrated in FIG. 12A.

The lower half of FIG. 15A shows a change over time in the placement condition above heating coils 31 to 34. FIG. 15B illustrates patterns of the placement condition of loads (pots La, Lb, and Lc) above heating coils 31 to 34.

As illustrated in FIG. 15B, in state Sa, pot La is placed above heating coils 33 and 34. In state Sb, pot La is placed above heating coils 32, 33, and 34. In state Sc, pot Lb is placed above heating coils 33 and 34. In state Sd, pot Lb is placed above heating coils 33 and 34, and pot Lc is placed above heating coil 32.

As illustrated in the lower half of FIG. 15A, confirmation of the placement condition in the case of "state Sa → state Sb" and the case of "state Sc → state Sd" will be described.

The case of "state Sa → state Sb" indicates that the placement condition is changed to state Sb from state Sa by moving pot La slightly. The case of "state Sc → state Sd" indicates that the placement condition is changed to state Sd from state Sc by adding pot Lc to the condition where pot Lb is placed.

Firstly, confirmation of the placement condition in the case of "state Sa → state Sb" will be described.

During detection period Dpa3 for heating coil 33 and detection period Dpa4 for heating coil 34 in detection cycle T(a), load detector 10 detects that pot La is placed as in state Sa. Load detector 10 tentatively determines that the placement condition is state Sa based on this result.

During detection period Dpb2 for heating coil 32, detection period Dpb3 for heating coil 33, and detection period Dpb4 for heating coil 34 in detection cycle T(b), load detector 10 detects that pot La is placed as in state Sb. Load detector 10 again tentatively determines that the placement condition is state Sb based on this result.

If the result of the placement detection in detection cycle T(c) is the same as the result in detection cycle T(b), load detector 10 confirms that the placement condition is state Sb. If not, load detector 10 again performs a tentative determination for the placement condition.

Next, confirmation of a placement condition in the case of "state Sc → state Sd" will be described.

During detection period Dpa3 for heating coil 33 and detection period Dpa4 for heating coil 34 in detection cycle T(a), load detector 10 detects that pot La is placed as in state Sc. Load detector 10 tentatively determines that the placement condition is state Sc based on this result.

When checking that there is no change in the placement condition and state Sc is continued in detection cycle T(b), load detector 10 confirms that the placement condition is state Sc.

During detection cycle T(c), the detection result for heating coil 32 in detection period Dpc2 is changed. Based on this result, load detector 10 tentatively determines that another load is additionally placed above heating coil 32 in confirmed state Sc.

When checking in detection cycle T(d) that there is no change in the detection result during the detection period for heating coil 32 and the same state is continued, load detector 10 confirms that another load is placed above heating coil 32. Thus, it is confirmed that the placement condition is state Sd.

According to the confirmation of a placement condition in the present exemplary embodiment, when a change in the placement condition is tentatively determined during the detection period in which the change is firstly detected, and the same detection result is continuously obtained in the following detection cycle, the tentative determination is changed to final determination. Furthermore, the tentative determination may be changed to final determination when the same detection result is continuously obtained in at least one following detection cycle after the tentative determination.

Confirmation of a placement condition when the above concept is applied to the induction heating cooker having the circuit configuration illustrated in FIG. 5 will be described below.

In the present exemplary embodiment, a process in section A and section B in left heating zone Lh will be described, as in the first to third exemplary embodiments. The similar process is simultaneously performed in right heating zone Rh and central heating zone Ch.

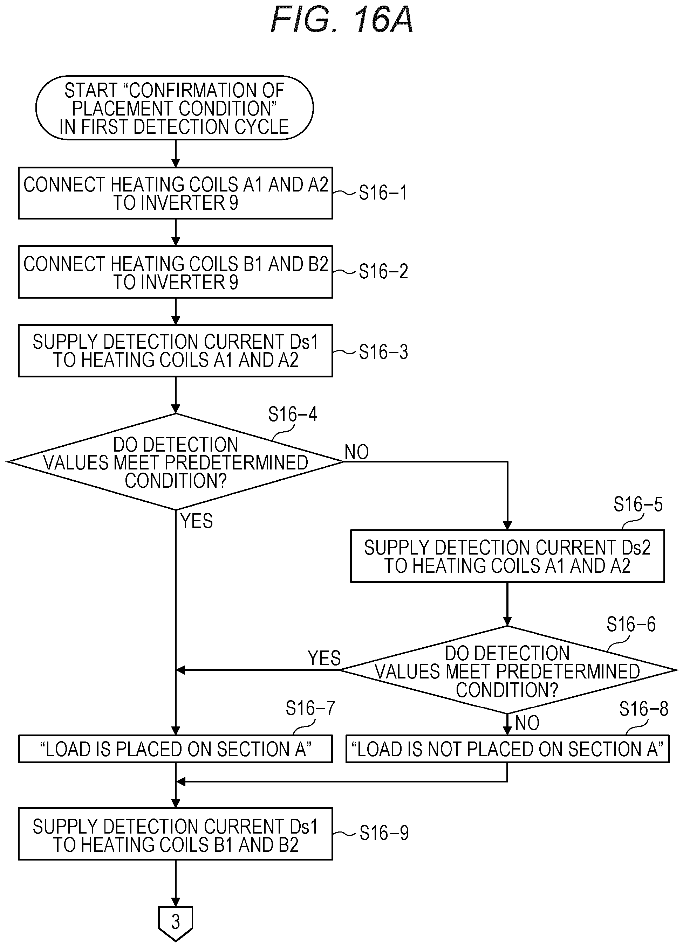

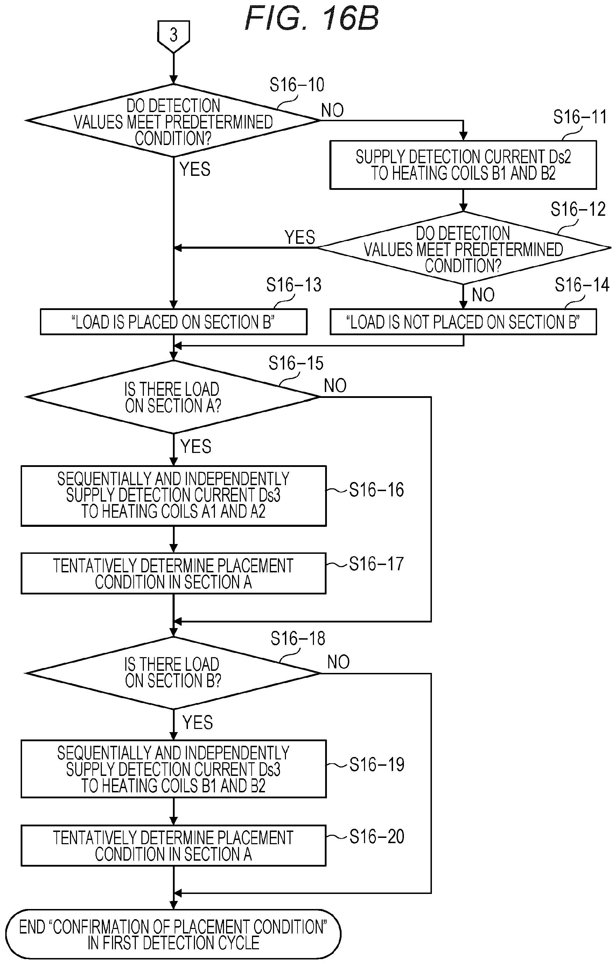

FIGS. 16A and 16B are flowcharts for confirmation of a placement condition in the first detection cycle after the induction heating device is started, for example.

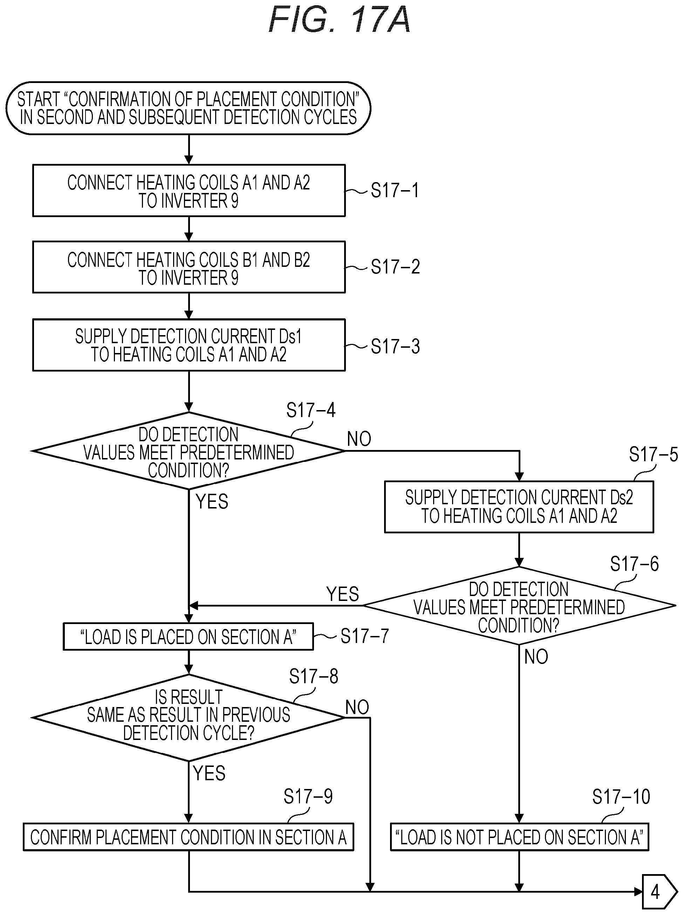

FIGS. 17A to 17C are flowcharts for confirmation of a placement condition in the second and subsequent detection cycles following the detection cycle where the processes illustrated in FIGS. 16A and 16B are performed.

Steps S16-1 to S16-14 in FIGS. 16A and 16B are the same as steps S9-1 to S9-14 in FIGS. 9A and 9B for the placement detection according to the first exemplary embodiment. Therefore, steps S16-1 to S16-14 will not be described, and the subsequent steps following step S16-14 will be described below.

When the result of the processes in steps S16-1 to S16-14 shows that "a load is placed on section A" in step S16-15, the process proceeds to step S16-16. If not, the process proceeds to step S16-18.

In step S16-16, detection current Ds3 is sequentially and independently supplied to heating coils A1 and A2. Load detector 10 performs position identification in section A by determining whether the load is placed above each of heating coils A1 and A2 in section A.

In step S16-17, load detector 10 tentatively determines the placement condition which is the result of the position identification in section A.

As in the first exemplary embodiment, the determination for the position identification in step S16-16 is performed based on detection values of input current detector 13 and output current detector 14 and/or a change in two consecutive detection values of each of input current detector 13 and output current detector 14.

In steps S16-18 to S16-20, the processes similar to the processes in steps S16-15 to S16-17 for section A are performed for section B. Thus, the placement condition in sections A and B is tentatively determined.

During the second and subsequent detection cycles following the first detection cycle where the processes illustrated in FIGS. 16A and 16B are performed, processes illustrated in FIGS. 17A to 17C are repeatedly performed.

In step S17-1 in FIG. 17A, a relay (if there is one) which has been in an off state from among relays 8a, 8b in section A is turned on to connect heating coils A1 and A2 to inverter 9 in section A. In step S17-2, a relay (if there is one) which has been in an off state from among relays 8a, 8b in section B is turned on to connect heating coils B1 and B2 to inverter 9 in section B.

In step S17-3, detection current Ds1 is supplied to heating coils A1 and A2 for on time Ton1 during detection period Dp1.

In step S17-4, load detector 10 performs a determination similar to the determination in step S9-4 in FIG. 9A for the detection values of input current detector 13 and output current detector 14 for section A. With this process, a relatively large load such as a pot with a diameter of about 150 mm or more can be detected.

When the result in step S17-4 is No, that is, when a load is not detected based on detection current Ds1, detection current Ds2 is supplied to heating coils A1 and A2 for on time Ton2 during detection period Dp2 in step S17-5.

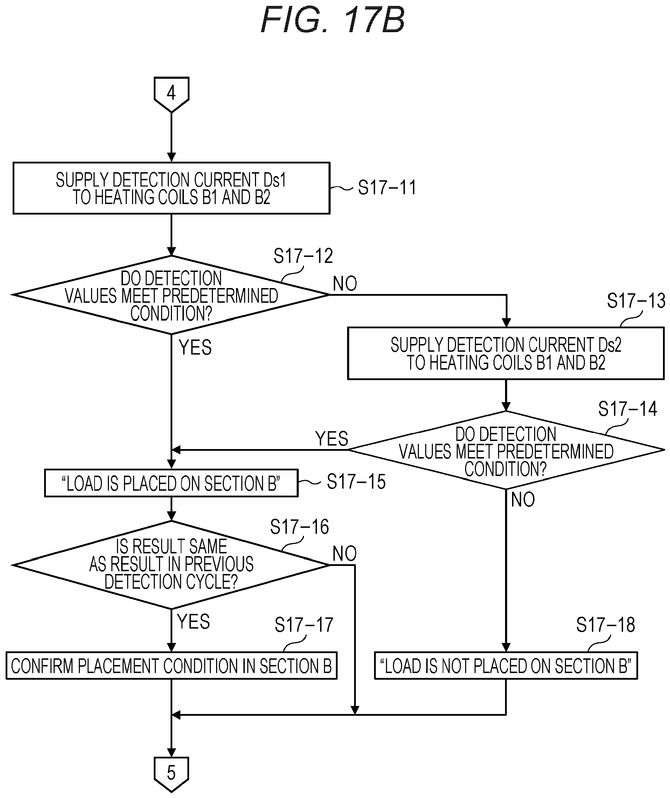

In step S17-6, load detector 10 performs a determination similar to the determination in step S9-4 in FIG. 9A for the detection values of input current detector 13 and output current detector 14 for section A. When the result in step S17-6 is No, load detector 10 determines that a load is not placed on section A in step S17-10. The process proceeds to FIG. 17B.

On the other hand, when the result in step S17-4 or S17-6 is Yes, load detector 10 determines that a load is placed on section A in step S17-7. In step S17-8, load detector 10 determines whether the result of the latest placement detection is the same as the result in the previous detection cycle.

When the result in step S17-8 is Yes, load detector 10 confirms the placement condition in section A in step S17-9. The process proceeds to FIG. 17B. When the result in step S17-8 is No, the process proceeds to FIG. 17B.

In steps S17-11 to S17-18 in FIG. 17B, the processes similar to the processes in steps S17-3 to S17-10 in FIG. 17A for section A are performed for section B.

In step S17-11, detection current Ds1 is supplied to heating coils B1 and B2 for on time Ton1 during detection period Dp1.

In step S17-12, load detector 10 performs a determination similar to the determination in step S9-4 in FIG. 9A for the detection values of input current detector 13 and output current detector 14 for section B.

When the result in step S17-12 is No, that is, when a load is not detected based on detection current Ds1, detection current Ds2 is supplied to heating coils B1 and B2 for on time Ton2 during detection period Dp2 in step S17-13.

In step S17-14, load detector 10 performs a determination similar to the determination in step S9-4 in FIG. 9A for the detection values of input current detector 13 and output current detector 14 for section B.

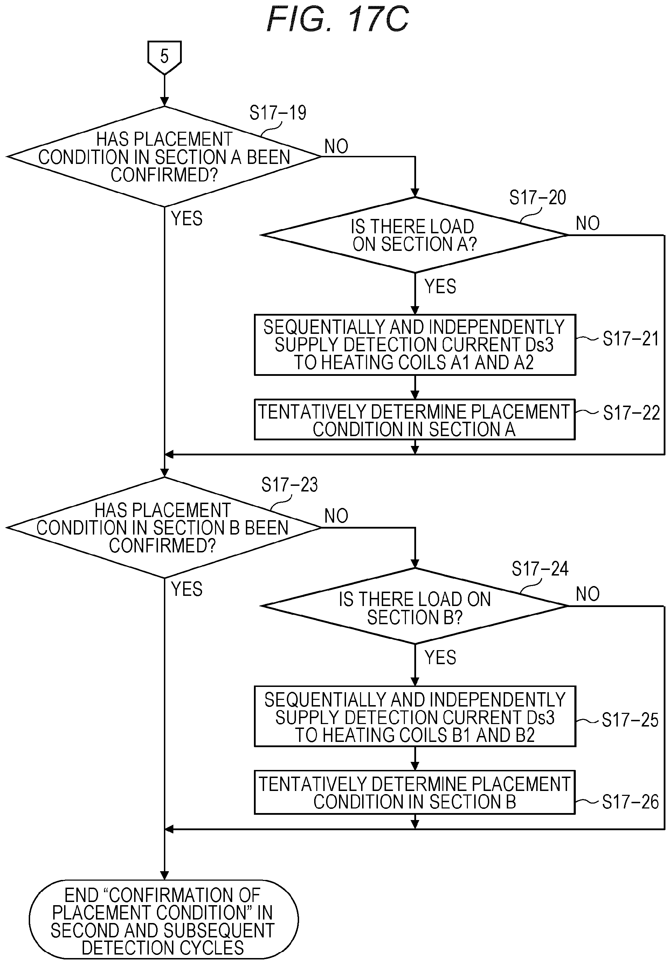

When the result in step S17-14 is No, that is, when a load is not detected even based on detection current Ds2, load detector 10 determines that a load is not placed on section B in step S17-18. The process proceeds to FIG. 17C.

On the other hand, when the result in step S17-12 or S17-14 is Yes, that is, when a load is detected based on detection current Ds1 or Ds2, load detector 10 determines that a load is placed on section B in step S17-15. In step S17-16, load detector 10 determines whether the result of the latest placement detection is the same as the result in the previous detection cycle.

When the result in step S17-16 is Yes, load detector 10 confirms the placement condition in section B in step S17-17. The process proceeds to FIG. 17C. When the result in step S17-16 is No, the process proceeds to FIG. 17C.

As illustrated in FIG. 17C, when the result of the confirmation of the placement condition illustrated in FIG. 17A shows that "the placement condition in section A has been confirmed" in step S17-19, the process proceeds to step S17-23. If not, the process proceeds to step S17-20.

When the result of the confirmation of the placement condition illustrated in FIG. 17A shows that "a load is placed on section A" in step S17-20, the process proceeds to step S17-21. If not, the process proceeds to step S17-23.

In step S17-21, detection current Ds3 is sequentially and independently supplied to heating coils A1 and A2. Load detector 10 performs position identification in section A by determining whether the load is placed above each of heating coils A1 and A2 in section A.

In step S17-22, load detector 10 tentatively determines the placement condition which is the result of the position identification in section A.

In steps S17-23 to S17-26, the processes similar to the processes in steps S17-19 to S17-22 for section A are performed for section B. Thus, the confirmation of the placement condition during the second and subsequent detection cycles is ended. The processes in FIGS. 17A to 17C are also repeatedly performed in the next and subsequent detection cycles.

According to the confirmation of the placement condition in the present exemplary embodiment, when it is detected that a load is placed above a heating coil adjacent to the heating coil above which a load is placed until a predetermined number of detection cycles elapses, load detector 10 determines that this condition is caused by the movement of the load. When a similar change is detected after a time longer than the predetermined number of detection cycles has elapsed, load detector 10 determines that this condition is caused by another load being placed.

In this way, the induction heating cooker according to the present exemplary embodiment can determine the placement condition of a load.

According to the confirmation of a placement condition in the present exemplary embodiment, after load detection and a tentative determination or confirmation of the placement condition in section A are finished, load detection and a tentative determination or confirmation of the placement condition in section B are performed.

However, the exemplary embodiment is not limited thereto. For example, after load detection in both sections A and B is finished, a tentative determination or confirmation of the placement condition in sections A, B may be performed.

After load detection for not only left heating zone Lh but also entire heating zone H is performed, a tentative determination or confirmation of the placement condition may be performed.

According to the confirmation of a placement condition in the present exemplary embodiment, when a load is placed across a plurality of heating zones, load detector 10 can detect the placement condition of the load with higher accuracy. Accordingly, drive controller 11 can drive an appropriate heating coil corresponding to the placement condition to inductively heat the load.

### (Fifth Exemplary Embodiment)

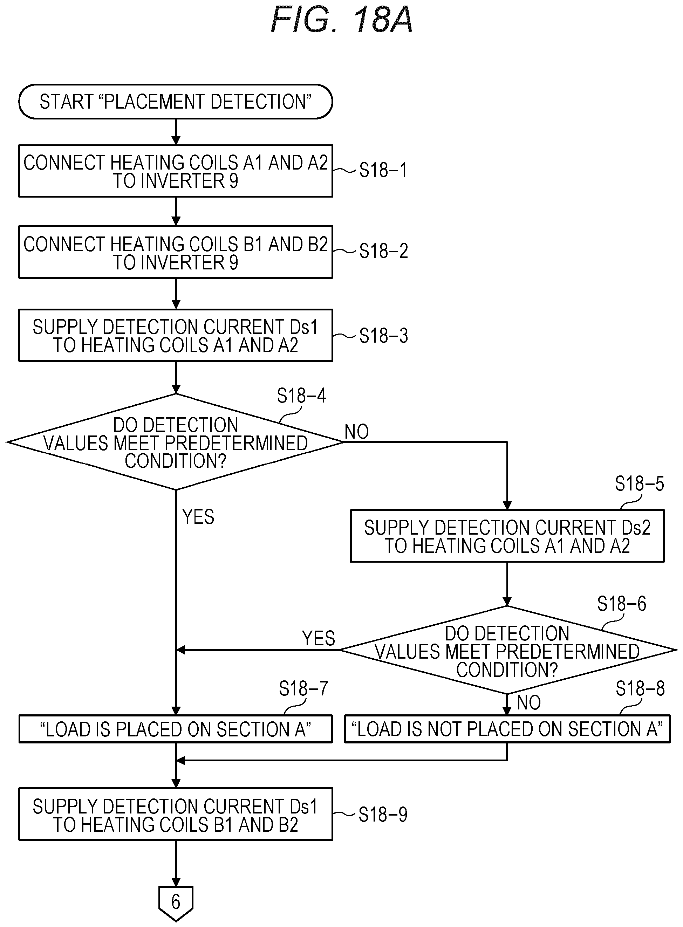

An induction heating cooker according to a fifth exemplary embodiment of the present disclosure will be described below with reference to FIGS. 18A to 22B.

The induction heating cooker in the present exemplary embodiment has the same configuration as the first exemplary embodiment illustrated in FIGS. 1 to 5. The induction heating cooker according to the present exemplary embodiment sequentially executes the placement detection according to the first exemplary embodiment, the position identification according to the second exemplary embodiment, the change in a detection cycle according to the third exemplary embodiment, and the confirmation of a placement condition according to the fourth exemplary embodiment.

In the present exemplary embodiment, a process in section A and section B in left heating zone Lh will be described, as in the first to fourth exemplary embodiments. The similar process is simultaneously performed in right heating zone Rh and central heating zone Ch.

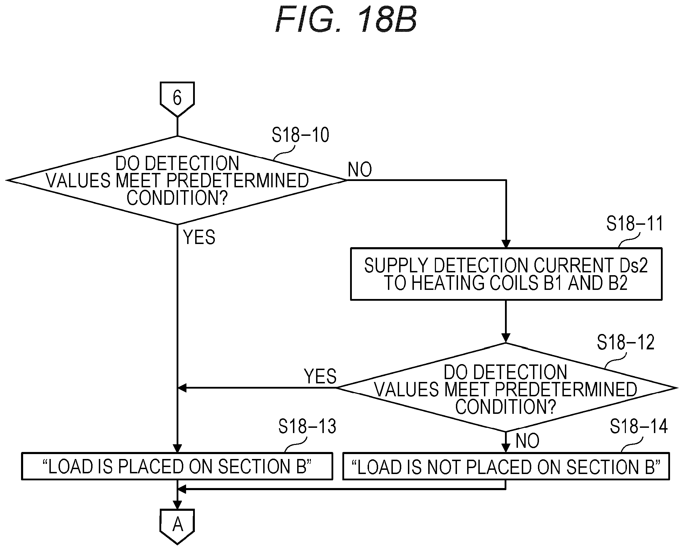

FIGS. 18A and 18B are flowcharts for placement detection according to the present exemplary embodiment. Placement detection indicated in steps S18-1 to S18-14 in FIGS. 18A and 18B is the same as the placement detection in steps S9-1 to S9-14 in FIGS. 9A and 9B according to the first exemplary embodiment. Therefore, the description for FIGS. 18A and 18B will be omitted.

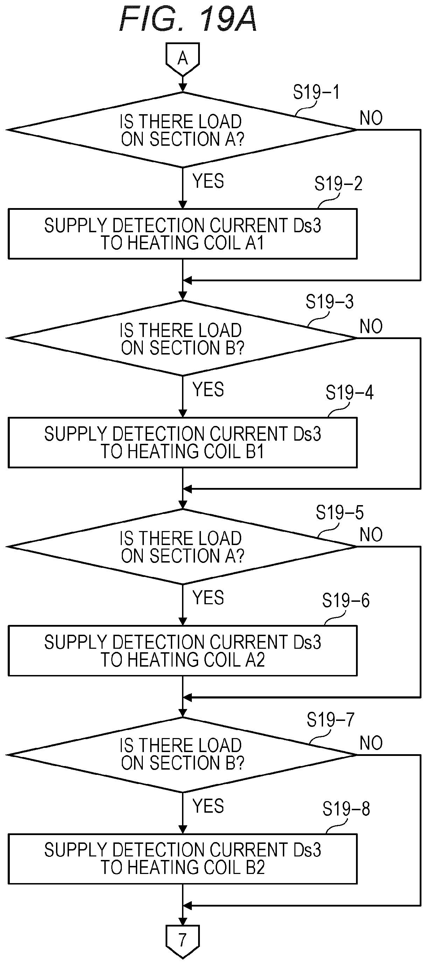

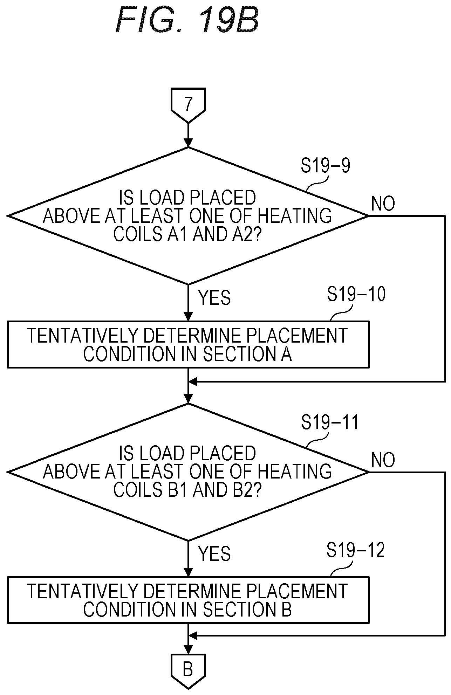

FIGS. 19A and 19B are flowcharts for position identification according to the present exemplary embodiment. Position identification in steps S19-1 to S19-8 in FIG. 19A is the same as the position identification illustrated in FIG. 12B according to the second exemplary embodiment. Therefore, the description for FIG. 19A will be omitted.

When the result of the position identification illustrated in FIG. 19B shows that "a load is placed above at least one of heating coils A1 and A2" in step S19-9 in FIG. 19B, the process proceeds to step S19-10. If not, the process proceeds to step S19-11.

In step S19-10, load detector 10 tentatively determines the placement condition in section A.

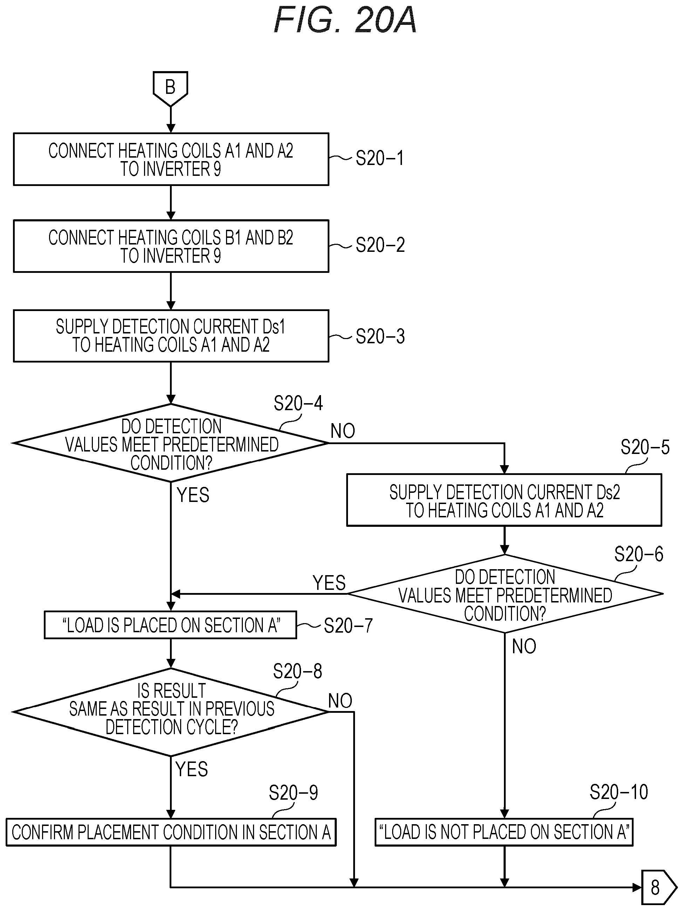

When the result of the position identification illustrated in FIG. 19B shows that "a load is placed above at least one of heating coils B1 and B2" in step S19-11, the process proceeds to step S19-12. If not, the process proceeds to FIG. 20A.

In step S19-12, load detector 10 tentatively determines the placement condition in section B. The process proceeds to FIG. 20A.

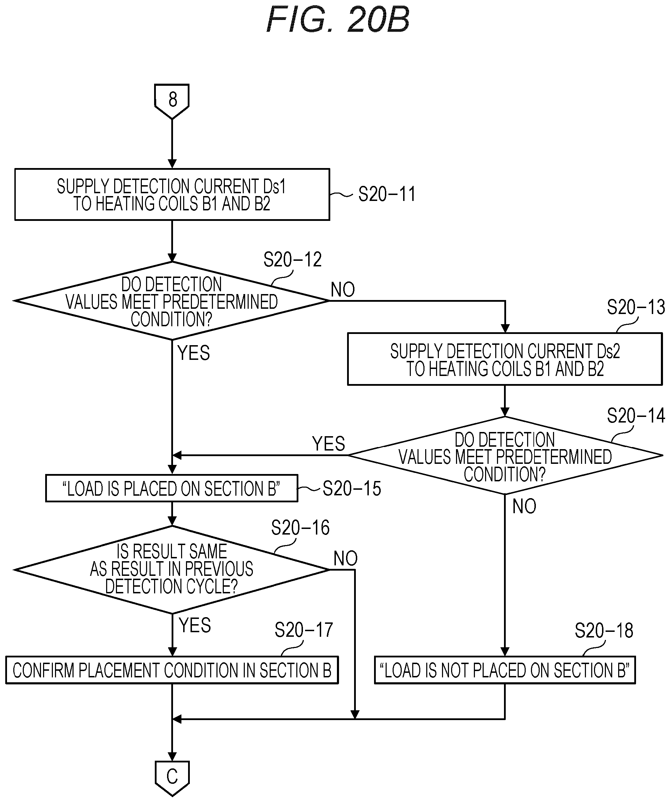

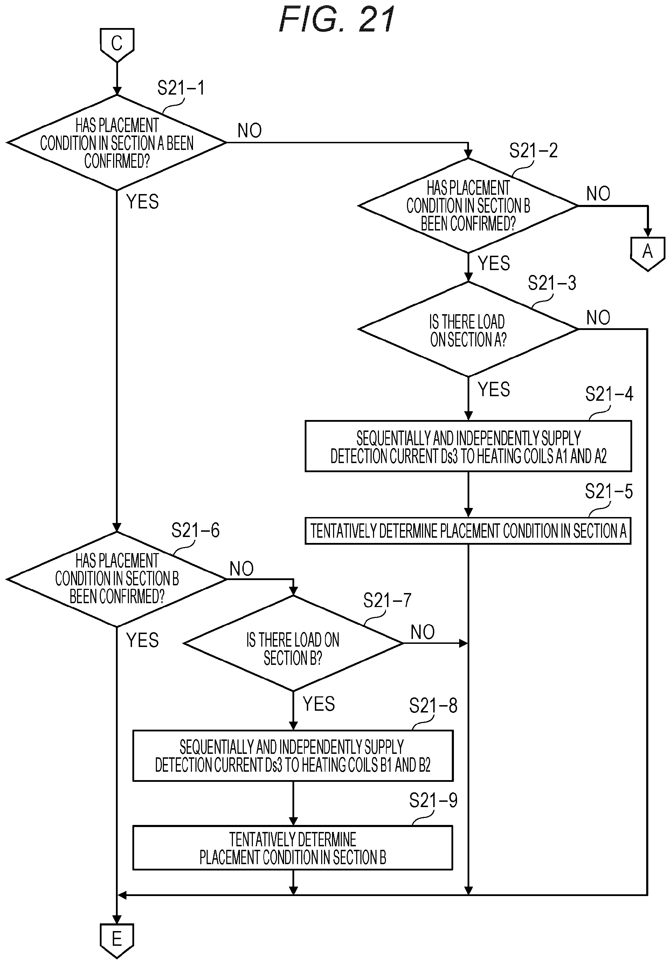

FIGS. 20A, 20B, and 21 are flowcharts for confirming a placement condition according to the present exemplary embodiment.

Confirmation of a placement condition indicated in steps S20-1 to S20-18 in FIGS. 20A and 20B is the same as the confirmation of a placement condition in steps S17-1 to S17-18 in FIGS. 17A and 17B according to the fourth exemplary embodiment. Therefore, the description for FIGS. 20A and 20B will be omitted.

As illustrated in FIG. 21, when the result of the confirmation of the placement condition illustrated in FIG. 20A shows that "the placement condition in section A has been confirmed" in step S21-1, the process proceeds to step S21-6. If not, the process proceeds to step S21-2.

When the result of the confirmation of the placement condition illustrated in FIG. 20B shows that "the placement condition in section B has been confirmed" in step S21-2, the process proceeds to step S21-3. If not, load detector 10 concludes that "the placement condition has not been confirmed in sections A and B", and ends the confirmation of a placement condition. The process returns to step S19-1 in FIG. 19A for again performing position identification.

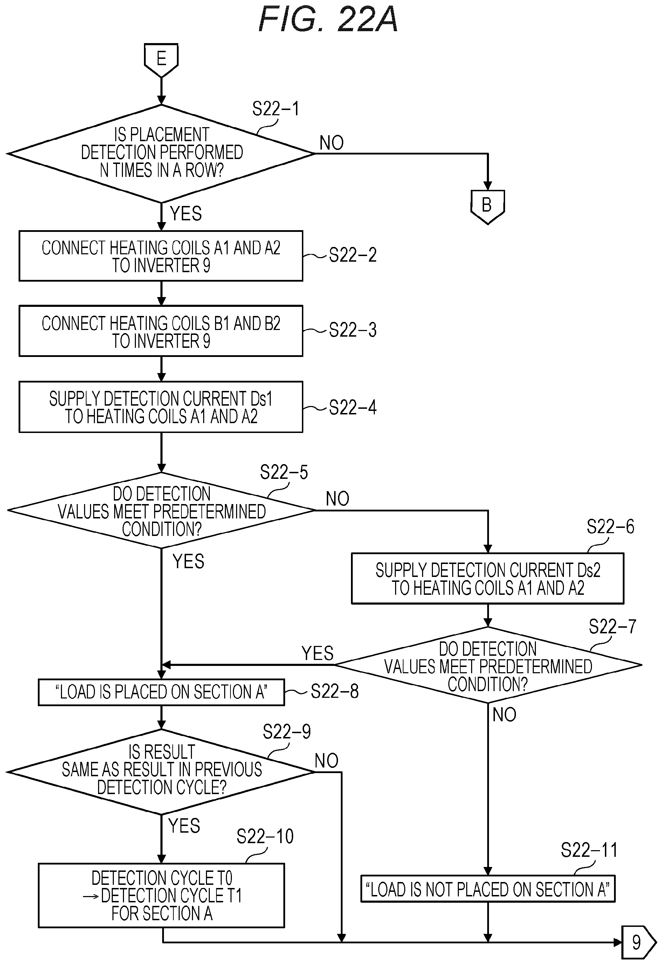

When the result of the process illustrated in FIG. 20A shows that "a load is placed on section A" in step S21-3, the process proceeds to step S21-4. If not, load detector 10 concludes that "the placement condition has been confirmed in section B and a load is not placed on section A", and ends the confirmation of a placement condition. The process proceeds to FIG. 22A.

In step S21-4, detection current Ds3 is sequentially and independently supplied to heating coils A1 and A2. Load detector 10 determines whether the load is placed above each of heating coils A1 and A2.

In step S21-5, load detector 10 concludes that "the placement condition has been confirmed in section B and the placement condition has been tentatively determined in section A", and ends the confirmation of a placement condition. The process proceeds to FIG. 22A.

In a case where the result of the process illustrated in FIG. 20B shows that "the placement condition in section B has been confirmed" in step S21-6, load detector 10 concludes that "the placement condition has been confirmed in sections A and B", and ends the confirmation of a placement condition. The process proceeds to FIG. 22A. If not, the process proceeds to step S21-7.

When the result of the confirmation of the placement condition illustrated in FIG. 20B shows that "a load is placed on section B" in step S21-7, the process proceeds to step S21-8. If not, load detector 10 concludes that "the placement condition has been confirmed in section A and a load is not placed on section B", and ends the confirmation of a placement condition. The process proceeds to FIG. 22A.

In step S21-8, detection current Ds3 is sequentially and independently supplied to heating coils B1 and B2. Load detector 10 determines whether the load is placed above each of heating coils B1 and B2.

In step S21-9, load detector 10 concludes that "the placement condition has been confirmed in section A and the placement condition has been tentatively determined in section B", and ends the confirmation of a placement condition. The process proceeds to FIG. 22A.

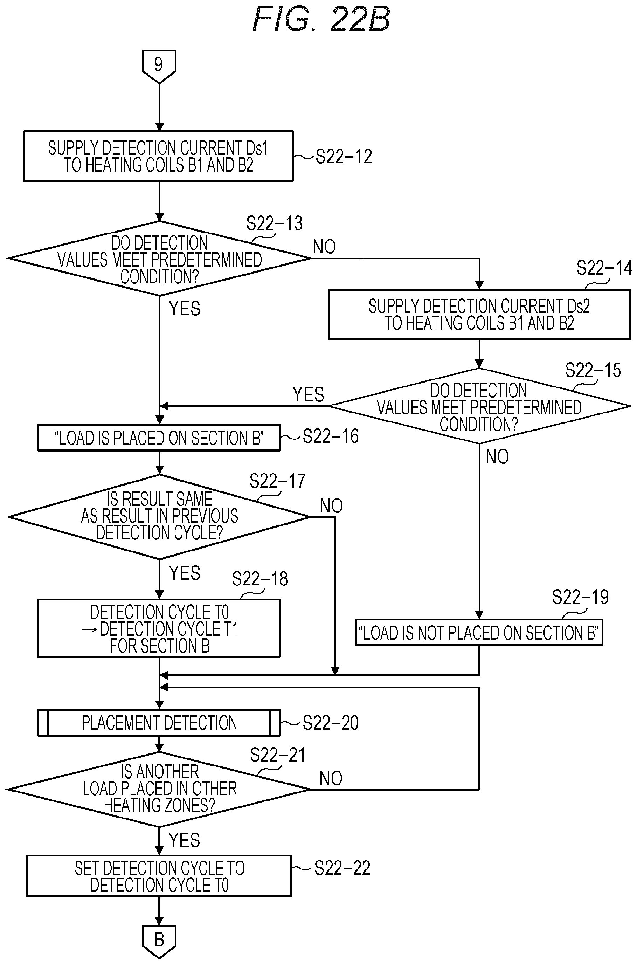

As described above, the confirmation of a placement condition illustrated in FIGS. 20A, 20B, and 21 is executed in the second detection cycle, and then, a change in a detection cycle illustrated in FIGS. 22A and 22B is executed in the third and subsequent detection cycles.

FIGS. 22A and 22B are flowcharts for changing a detection cycle according to the present exemplary embodiment.

As illustrated in FIGS. 22A and 22B, in step S22-1, drive controller 11 determines whether the placement detection is performed a predetermined number of times (N times, for example, five times) in a row. Until the number of times of the placement detection becomes N, the process returns to step S20-1 in FIG. 20A. When the placement detection is performed N times in a row, the process proceeds to step S22-2.

In step S22-2, a relay (if there is one) which has been in an off state from among relays 8a, 8b in section A is turned on to connect heating coils A1 and A2 to inverter 9 in section A. In step S22-3, a relay (if there is one) which has been in an off state from among relays 8a, 8b in section B is turned on to connect heating coils B1 and B2 to inverter 9 in section B.

In step S22-4, detection current Ds1 is supplied to heating coils A1 and A2 for on time Ton1 during detection period Dp1.

In step S22-5, load detector 10 performs a determination similar to the determination in step S9-4 in FIG. 9A for the detection values of input current detector 13 and output current detector 14 for section A. With this process, a relatively large load such as a pot with a diameter of about 150 mm or more is detected.

When the result in step S22-5 is No, that is, when a load is not detected based on detection current Ds1, detection current Ds2 is supplied to heating coils A1 and A2 for on time Ton2 during detection period Dp2 in step S22-6.

In step S22-7, load detector 10 performs a determination similar to the determination in step S9-4 in FIG. 9A for the detection values of input current detector 13 and output current detector 14 for section A. When the result in step S22-7 is No, load detector 10 determines that a load is not placed on section A in step S22-11. The process proceeds to FIG. 22B.

On the other hand, when the result in step S22-5 or S22-7 is Yes, load detector 10 determines that a load is placed on section A in step S22-8. In step S22-9, load detector 10 determines whether the result of the latest placement detection is the same as the result in the previous detection cycle.

When the result in step S22-9 is Yes, the detection cycle for section A is extended to detection cycle T1 from detection cycle T0 in step S22-10. In the present exemplary embodiment, detection cycle T1 is 8 seconds. Then, the process proceeds to FIG. 22B. When the result in step S22-9 is No, the process proceeds to FIG. 22B.

In steps S22-12 to S22-19 in FIG. 22B, processes similar to the processes in steps S22-4 to S22-11 are performed for section B.

In step S22-12, detection current Ds1 is supplied to heating coils B1 and B2 for on time Ton1 during detection period Dp1.

In step S22-13, load detector 10 performs a determination similar to the determination in step S9-4 in FIG. 9A for the detection values of input current detector 13 and output current detector 14 for section B.

When the result in step S22-13 is No, that is, when a load is not detected based on detection current Ds1, detection current Ds2 is supplied to heating coils B1 and B2 for on time Ton2 during detection period Dp2 in step S22-14.

In step S22-15, load detector 10 performs a determination similar to the determination in step S9-4 in FIG. 9A for the detection values of input current detector 13 and output current detector 14 for section B.

When the result in step S22-15 is No, that is, when a load is not detected even based on detection current Ds2, load detector 10 determines that a load is not placed on section B in step S22-19. Then, the process proceeds to step S22-20.

On the other hand, when the result in step S22-13 or S22-15 is Yes, that is, when a load is detected based on detection current Ds1 or Ds2, load detector 10 determines that the load is placed on section B in step S22-16. In step S22-17, load detector 10 determines whether the result of the latest placement detection is the same as the result in the previous detection cycle.

When the result in step S22-17 is Yes, the detection cycle for section B is extended to detection cycle T1 from detection cycle T0 in step S22-18. Then, the process proceeds to step S22-20. When the result in step S22-17 is No, the process proceeds to step S22-20.

In step S22-20, the placement detection is performed. In step S22-21, load detector 10 determines whether there is a change in the placement condition regarding other heating zones, for example, central heating zone Ch.

When the result in step S22-21 is No, the placement detection is performed every determined detection cycle. When the result in step S22-21 is Yes, drive controller 11 sets the detection cycle to detection cycle T0 in step S22-22. That is, if the detection cycle has been set to detection cycle T1, the detection cycle is returned to detection cycle T0.

In the present exemplary embodiment, when it is detected that a load is placed in section A, a tentative determination or confirmation is performed for the placement condition in section A. When it is also detected that a load is placed in section B, a tentative determination or confirmation is performed for the placement condition in section B.

However, when the load detection for sections A and B is ended, a tentative determination or confirmation may be performed for the placement conditions in sections A and B.

After load detection for not only left heating zone Lh but also entire heating zone H is ended, a tentative determination or confirmation may be performed for a placement condition in entire heating zone H.

Thus, in a case where a load is placed across a plurality of sections, the placement condition of the load can accurately be detected.

### INDUSTRIAL APPLICABILITY

The present disclosure is applicable to a multi-coil induction heating device having multiple heating coils provided below a top panel.

### REFERENCE MARKS IN THE DRAWINGS

- 1:: housing
- 2:: top panel
- 3, 31, 32, 33, 34, A1, A2, B1, B2:: heating coil
- 4:: driver
- 5:: operation display unit
- 6:: infrared sensor
- 7:: thermistor
- 8:: switching unit
- 8a, 8b, 25:: relay
- 9:: inverter
- 10:: load detector
- 11:: drive controller
- 12:: commercial power source
- 13:: input current detector
- 14, 23:: output current detector
- 15:: diode bridge
- 16:: choke coil
- 17:: capacitor
- 18:: filter circuit
- 19a, 19b:: switching element
- 20:: snubber capacitor
- 21a, 21b, 21c, 21d:: resonant capacitor
- 22:: input voltage detector
- 24:: clamp capacitor
- 50:: controller

## Claims

1. An induction heating device comprising:
a top panel (2) on which a load is placed;
a plurality of heating coils (3, 31, 32, 33, 34, A1, A2, B1, B2) provided below the top panel (2);
at least one driver (4) configured to supply a high frequency power to the plurality of heating coils (3, 31, 32, 33, 34, A1, A2, B1, B2);
an electric signal detector (13, 14, 22, 23) configured to detect an electric signal relating to an element included in the driver (4); and
a controller (50) configured to receive the electric signal and control the driver (4),
**characterised in that**
the controller (50) is configured to cause the at least one driver (4) to repeatedly supply a detection current which is the high frequency power to the plurality of heating coils (3, 31, 32, 33, 34, A1, A2, B1, B2) at a predetermined detection cycle, and determine for each of the plurality of heating coils (3, 31, 32, 33, 34, A1, A2, B1, B2) whether the load is placed above the heating coil based on the electric signal in response to the detection current, and
the controller (50) is configured to control the driver (4) such that the detection cycle is extended for a heating coil which is determined to have the load placed thereabove, from among the plurality of heating coils (3, 31, 32, 33, 34, A1, A2, B1, B2).

2. The induction heating device according to claim 1,
wherein the controller (50) is configured to extend the detection cycle for a heating coil which is continuously determined a predetermined number of times to have the load placed thereabove, from among the plurality of heating coils (3, 31, 32, 33, 34, A1, A2, B1, B2).

3. The induction heating device according to claim 1,
wherein the controller (50) is configured to shorten the detection cycle which is extended when determining that a load is placed above a heating coil above which a load has not been placed, from among the plurality of heating coils (3, 31, 32, 33, 34, A1, A2, B1, B2).

4. A load detection method : for an induction heating device, **characterized by**
repeatedly supplying a detection current which is a high frequency power to a plurality of heating coils (3, 31, 32, 33, 34, A1, A2, B1, B2) provided below a top panel (2) at a predetermined detection cycle;
determining whether the load is placed above the plurality of heating coils (3, 31, 32, 33, 34, A1, A2, B1, B2) based on the electric signal in response to the detection current; and
extending the detection cycle for a heating coil which is determined to have the load placed thereabove, from among the plurality of heating coils (3, 31, 32, 33, 34, A1, A2, B1, B2).

5. The load detection method according to claim 4, further comprising extending the detection cycle for a heating coil which is continuously determined a predetermined number of times to have a load placed thereabove, from among the plurality of heating coils (3, 31, 32, 33, 34, A1, A2, B1, B2).

6. The load detection method according to claim 4, further comprising shortening the detection cycle which is extended when the load is determined to be placed above a heating coil above which a load has not been placed, from among the plurality of heating coils (3, 31, 32, 33, 34, A1, A2, B1, B2).

## Patentansprüche

1. Induktionserwärmungsvorrichtung, umfassend:
eine obere Platte (2), auf die eine Last platziert wird;
eine Mehrzahl von Heizschlangen (3, 31, 32, 33, 34, A1, A2, B1, B2), die unter der oberen Platte (2) bereitgestellt sind;
wenigstens einen Treiber (4), der konfiguriert ist, um der Mehrzahl von Heizschlangen (3, 31, 32, 33, 34, A1, A2, B1 B2) eine Hochfrequenzleistung zuzuführen;
einen Detektor (13, 14, 22, 23) für elektrische Signale, der konfiguriert ist, um ein elektrisches Signal zu erfassen, das sich auf ein in dem Treiber (4) enthaltenes Element bezieht; und
eine Steuervorrichtung (50), die konfiguriert ist, um das elektrische Signal zu empfangen und den Treiber (4) zu steuern,
**dadurch gekennzeichnet, dass**
die Steuervorrichtung (50) konfiguriert ist, um zu bewirken, dass der mindestens eine Treiber (4) wiederholt einen Erfassungsstrom, der die Hochfrequenzleistung ist, an die Mehrzahl von Heizschlangen (3, 31, 32, 33, 34, A1, A2, B1, B2) in einem vorbestimmten Erfassungszyklus zuführt, und für jede der Mehrzahl von Heizschlangen (3, 31, 32, 33, 34, A1, A2, B1, B2) auf Grundlage des elektrischen Signals als Reaktion auf den Erfassungsstrom zu bestimmen, ob die Last über der Heizschlange platziert ist, und
die Steuervorrichtung (50) konfiguriert ist, um den Treiber (4) derart zu steuern, dass der Erfassungszyklus für eine Heizschlange der aus der Mehrzahl von Heizschlangen (3, 31, 32, 33, 34, A1, A2, B1, B2) verlängert wird, bei der bestimmt wird, dass sie die Last darüber platziert aufweist.

2. Induktionserwärmungsvorrichtung nach Anspruch 1,
wobei die Steuervorrichtung (50) konfiguriert ist, um den Erfassungszyklus für eine Heizschlange aus der Mehrzahl von Heizschlangen (3, 31, 32, 33, 34, A1, A2, B1, B2) zu verlängern, bei der kontinuierlich eine vorbestimmte Anzahl von Malen bestimmt wird, dass sie die Last darüber platziert aufweist.

3. Induktionserwärmungsvorrichtung nach Anspruch 1,
wobei die Steuervorrichtung (50) konfiguriert ist, um den Erfassungszyklus zu verkürzen, der verlängert wird, wenn bestimmt wird, dass eine Last über einer Heizschlange aus der Mehrzahl von Heizschlangen (3, 31, 32, 33, 34, A1, A2, B1 B2) platziert ist, über der keine Last platziert wurde.

4. Lasterfassungsverfahren für eine Induktionserwärmungsvorrichtung, **gekennzeichnet durch**
wiederholtes Zuführen eines Erfassungsstroms, der eine Hochfrequenzleistung ist, an eine Mehrzahl von Heizschlangen (3, 31, 32, 33, 34, A1, A2, B1, B2), die unterhalb einer oberen Platte (2) bereitgestellt sind, in einem vorbestimmten Erfassungszyklus;
Bestimmen auf Grundlage des elektrischen Signals als Reaktion auf den Erfassungsstrom, ob die Last über der Mehrzahl von Heizschlangen (3, 31, 32, 33, 34, A1, A2, B1, B2) platziert ist; und
Verlängern des Erfassungszyklus für eine Heizschlange aus der Mehrzahl der Heizschlangen (3, 31, 32, 33, 34, A1, A2, B1, B2), bei der bestimmt wird, dass sie die Last darüber platziert aufweist.

5. Lasterfassungsverfahren nach Anspruch 4, ferner umfassend
Verlängern des Erfassungszyklus für eine Heizschlange aus der Mehrzahl von Heizschlangen (3, 31, 32, 33, 34, A1, A2, B1, B2), bei der kontinuierlich eine vorbestimmte Anzahl von Malen bestimmt wird, dass sie eine Last darüber platziert aufweist.

6. Lasterfassungsverfahren nach Anspruch 4, ferner umfassend
Verkürzen des Erfassungszyklus, der verlängert wird, wenn bestimmt wird, dass die Last über einer Heizschlange aus der Mehrzahl der Heizschlangen (3, 31, 32, 33, 34, A1, A2, B1, B2) platziert werden soll, über der keine Last platziert wurde.

## Revendications

1. Dispositif chauffant par induction comprenant :
un panneau supérieur (2) sur lequel une charge est placée ;
une pluralité de bobines chauffantes (3, 31, 32, 33, 34, A1, A2, B1, B2) disposées au-dessous du panneau supérieur (2) ;
au moins un dispositif d'entraînement (4) conçu pour fournir une puissance à haute fréquence à la pluralité de bobines chauffantes (3, 31, 32, 33, 34, A1, A2, B1, B2) ;
un détecteur de signal électrique (13, 14, 22, 23) conçu pour détecter un signal électrique lié à un élément compris dans le dispositif d'entraînement (4) ; et
un dispositif de commande (50) conçu pour recevoir le signal électrique et commander le dispositif d'entraînement (4),
**caractérisé en ce que**
le dispositif de commande (50) est conçu pour amener l'au moins un dispositif d'entraînement (4) à fournir de manière répétée un courant de détection qui est la puissance à haute fréquence à la pluralité de bobines chauffantes (3, 31, 32, 33, 34, A1, A2, B1, B2) dans un cycle de détection prédéterminé, et déterminer pour chacune de la pluralité de bobines chauffantes (3, 31, 32, 33, 34, A1, A2, B1, B2) si la charge est placée au-dessus de la bobine chauffante en fonction du signal électrique en réponse au courant de détection, et
le dispositif de commande (50) est conçu pour commander le dispositif d'entraînement (4) de manière que le cycle de détection est étendu pour une bobine chauffante qui est déterminée comme présentant la charge placée au-dessus de celle-ci, parmi la pluralité de bobines chauffantes (3, 31, 32, 33, 34, A1, A2, B1, B2).

2. Dispositif chauffant par induction selon la revendication 1,
dans lequel le dispositif de commande (50) est conçu pour étendre le cycle de détection pour une bobine chauffante qui est déterminée en continu un nombre prédéterminé de fois comme présentant la charge placée au-dessus de celle-ci, parmi la pluralité de bobines chauffantes (3, 31, 32, 33, 34, A1, A2, B1, B2).

3. Dispositif chauffant par induction selon la revendication 1,
dans lequel le dispositif de commande (50) est conçu pour raccourcir le cycle de détection qui est étendu lorsque l'on détermine qu'une charge est placée au-dessus d'une bobine chauffante au-dessus de laquelle une charge n'a pas été placée, parmi la pluralité de bobines chauffantes (3, 31, 32, 33, 34, A1, A2, B1, B2).

4. Procédé de détection de charge pour un dispositif chauffant par induction, **caractérisé par** le fait de fournir de manière répétée un courant de détection qui est une puissance à haute fréquence à une pluralité de bobines chauffantes (3, 31, 32, 33, 34, A1, A2, B1, B2) disposées au-dessous d'un panneau supérieur (2) dans un cycle de détection prédéterminé ,
la détermination de savoir si la charge est placée au-dessus de la pluralité de bobines chauffantes (3, 31, 32, 33, 34, A1, A2, B1, B2) en fonction du signal électrique en réponse au courant de détection ; et
l'extension du cycle de détection pour une bobine chauffante qui est déterminée comme présentant la charge placée au-dessus de celle-là, parmi la pluralité de bobines chauffantes (3, 31, 32, 33, 34, A1, A2, B1, B2).

5. Procédé de détection de charge selon la revendication 4, comprenant en outre l'extension du cycle de détection pour une bobine chauffante qui est déterminée en continu un nombre prédéterminé de fois comme présentant une charge placée au-dessus de celle-là, parmi la pluralité de bobines chauffantes (3, 31, 32, 33, 34, A1, A2, B1, B2).

6. Procédé de détection de charge selon la revendication 4, comprenant en outre le raccourcissement du cycle de détection qui est étendu lorsque la charge est déterminée comme étant placée au-dessus d'une bobine chauffante au-dessus de laquelle une charge n'a pas été placée, parmi la pluralité de bobines chauffantes (3, 31, 32, 33, 34, A1, A2, B1, B2).
